# EUROPEAN PATENT APPLICATION

(11) **EP 4 307 762 A1**
(43) Date of publication of application: **17.01.2024**
(21) Application number: 22794705.8
(22) Date of filing: 20.04.2022
(51) Int. Cl.: H04W 28/02

(54) **METHOD FOR TRANSMITTING PACKET IN WIRELESS LOCAL AREA NETWORK AND ELECTRONIC DEVICE**

(30) Priority: 30.04.2021 CN 202110484546
(71) Applicant: Huawei Technologies Co., Ltd., Longgang Shenzhen, Guangdong 518129 (CN)
(72) Inventor: GUO, Yongkang, Shenzhen, Guangdong 518129 (CN); WANG, Tongbo, Shenzhen, Guangdong 518129 (CN); SHU, Haw-Wei, Shenzhen, Guangdong 518129 (CN)
(74) Representative: MERH-IP Matias Erny Reichl Hoffmann Patentanwälte PartG mbB
(86) International application number: PCT/CN2022/087898
(87) International publication number: WO 2022/228234

(57) **Abstract**

A packet transmission method in a wireless local area network and an electronic device are provided, and relate to the field of terminal technologies. The method includes: identifying a service type of a first packet, and transmitting the first packet on each resource unit RU of a plurality of RUs if the service type of the first packet is a first service. According to this solution, packets of different services may be processed differently based on service features. For packets of the first service, a same packet is transmitted on the plurality of RUs, to improve redundancy of the packets of the first service. In this way, a transmission delay of the first service can be reduced, and transmission performance of a Wi-Fi device can be improved.

## Description

This application claims priority to Chinese Patent Application No. 202110484546.9, filed with the China National Intellectual Property Administration on April 30, 2021 and entitled "PACKET TRANSMISSION METHOD IN WIRELESS LOCAL AREA NETWORK AND ELECTRONIC DEVICE", which is incorporated herein by reference in its entirety.

### TECHNICAL FIELD

This application relates to the field of terminal technologies, and in particular, to a packet transmission method in a wireless local area network and an electronic device.

### BACKGROUND

Because of a low tariff and a fast network speed, Wi-Fi becomes a first choice for many users to access a network. A Wi-Fi device is used for Wi-Fi network access. The Wi-Fi device may be a device that includes a Wi-Fi chip, for example, an access point (access point, AP) or a station (station, STA).

The Wi-Fi device may increase an antenna gain by increasing transmit power of the Wi-Fi chip, reducing sensitivity, or the like, to improve transmitting and receiving performance. Specifically, a device like a power amplifier (power amplifier, PA), a low noise amplifier (low noise amplifier, LNA), or a radio frequency front end module (front end module, FEM) may be configured to increase transmit power or reduce sensitivity, to achieve an objective of increasing a rate and enhancing coverage.

Currently, for a single station, performance of a Wi-Fi module of the station is limited due to factors such as a device volume and power consumption of the station, and consequently, network access performance of the station is limited.

### SUMMARY

This application provides a packet transmission method in a wireless local area network (wireless local area network, WLAN) and an electronic device, to improve transmitting and receiving performance of a Wi-Fi module in the electronic device.

To achieve the foregoing objectives, embodiments of this application provide the following technical solutions.

According to a first aspect, a data transmission method in a WLAN is provided, applied to an electronic device or a component (for example, a chip system) that can be matched and used with the electronic device to implement a function of the electronic device. For example, the method is applied to the electronic device, and the method includes: identifying a service type of a first packet, and transmitting the first packet on each resource unit RU of a plurality of RUs if the service type of the first packet is a first service. According to this solution, packets of different services may be processed differently based on service features. For packets of the first service, a same packet is transmitted on the plurality of RUs, to improve redundancy of the packets of the first service. In this way, a transmission delay of the first service can be reduced, transmission performance of a Wi-Fi device can be improved, and Wi-Fi service experience of a user can be improved.

In a possible design, the method further includes: identifying service types of a plurality of second packets; and
transmitting the plurality of second packets on the plurality of RUs if the service types of the plurality of second packets are second services.

Second packets transmitted on different RUs of the plurality of RUs are different, and the second service is different from the first service.

In this solution, in the plurality of RUs, in addition to frequency domain resources used to transmit the packets of the first service, if there are remaining frequency domain resources in the plurality of RUs, the remaining frequency domain resources may be used to transmit packets of another service, for example, a plurality of packets of the second service. In this way, resource utilization of the plurality of RUs can be improved, and a resource idleness probability can be reduced. In addition, the plurality of packets of the second service are allocated to different RUs for transmission, so that transmission efficiency of the second service can be improved as much as possible.

In a possible design, the method further includes:
obtaining network status information; and
the transmitting a same first packet on each resource unit RU of a plurality of RUs if the service type of the first packet is a first service includes: transmitting the first packet on each RU of the plurality of RUs based on the network status information if the service type of the first packet is the first service.

The network status information includes any one or more pieces of the following information: a packet loss rate, an interference value, and a retransmission rate.

In a possible design, the plurality of RUs used to transmit the first packet are different when packet loss rates are in different ranges; and/or the plurality of RUs used to transmit the first packet are different when interference values are in different ranges; and/or the plurality of RUs used to transmit the first packet are different when retransmission rates are in different ranges.

In a possible design, a quantity of RUs used to transmit the first packet is a first quantity when the packet loss rate is a first packet loss rate; or the quantity of RUs used to transmit the first packet is a second quantity when the packet loss rate is a second packet loss rate, where the first quantity is greater than the first quantity, and the first packet loss rate is greater than the second packet loss rate; and/or
the quantity of RUs used to transmit the first packet is a third quantity when the interference value is a first interference value; or the quantity of RUs used to transmit the first packet is a fourth quantity when the interference value is a second interference value, where the third quantity is greater than the fourth quantity, and the first interference value is greater than the second interference value; and/or
the quantity of RUs used to transmit the first packet is a fifth quantity when the retransmission rate is a first retransmission rate; or the quantity of RUs used to transmit the first packet is a sixth quantity when the retransmission rate is a second retransmission rate, where the fifth quantity is greater than the sixth quantity, and the first retransmission rate is greater than the second retransmission rate.

In this solution, when it is determined by the first electronic device based on the network status information that network statuses are different, RUs used by the first electronic device to transmit the first packet may be different. For example, in a scenario in which the network status information indicates a poor network status, for example, in a scenario in which there is a high packet loss rate, a packet may be transmitted on more RUs of a plurality of RUs allocated by the second electronic device. In this way, a plurality of packets may be sent concurrently, to improve packet redundancy, so that packet transmission reliability can be improved. In a scenario in which a network status is good, a packet may be transmitted on fewer RUs of the plurality of allocated RUs, so that remaining RUs of the plurality of allocated RUs are reserved for another packet or service for use. In other words, a resource used for packet transmission can be dynamically adjusted based on an actual status of a network in which the first electronic device is located, so that resource utilization can be improved.

In a possible design, the method further includes: receiving a setting instruction entered by a user, and the setting instruction is used to set the first service and/or set the second service.

In a possible design, the first service includes any one or more of the following services: a game, an online course, instant messaging, live streaming, red packet grabbing, projection, an Internet of Things service, and an industrial Internet of Things service. In other words, for low-delay services such as the online course and the instant messaging, a same packet may be transmitted on a plurality of RUs to improve redundancy, so that reliability can be improved and transmission delay can be reduced.

In a possible design, the second service includes a file upload service and a file download service.

According to a second aspect, a data transmission method in a wireless local area network WLAN is provided, where the method is applied to an electronic device, and includes:
identifying a service type of a first packet and identifying service types of a plurality of second packets;
transmitting the first packet on each frequency band of a plurality of frequency bands if the service type of the first packet is a first service; and
transmitting the plurality of second packets on the plurality of frequency bands if the service types of the plurality of second packets are second services.

Second packets transmitted on different frequency bands of the plurality of frequency bands are different, and the second service is different from the first service.

In a possible design, the method further includes:
obtaining network status information; and
the transmitting the first packet on each frequency band of a plurality of frequency bands if the service type of the first packet is a first service includes: transmitting the first packet on each frequency band of the plurality of frequency bands based on the network status information if the service type of the first packet is the first service.

The network status information includes any one or more pieces of the following information: a packet loss rate, an interference value, and a retransmission rate.

In a possible design, the plurality of frequency bands used to transmit the first packet are different when packet loss rates are in different ranges; and/or the plurality of frequency bands used to transmit the first packet are different when interference values are in different ranges; and/or the plurality of frequency bands used to transmit the first packet are different when retransmission rates are in different ranges.

In a possible design, the method further includes: receiving a setting instruction entered by a user, and the setting instruction is used to set the first service and/or set the second service.

In a possible design, the first service includes any one or more of the following services: a game, an online course, instant messaging, live streaming, red packet grabbing, projection, an Internet of Things service, and an industrial Internet of Things service.

In a possible design, the second service includes a file upload service and a file download service.

According to a third aspect, an electronic device is provided, including:
a processing module, configured to identify a service type of a first packet; and
a communication module, configured to transmit the first packet on each resource unit RU of a plurality of RUs if the service type of the first packet is a first service.

In a possible design, the processing module is further configured to identify service types of a plurality of second packets; and
the communication module is further configured to transmit the plurality of second packets on the plurality of RUs if the service types of the plurality of second packets are second services.

Second packets transmitted on different RUs of the plurality of RUs are different, and the second service is different from the first service.

In a possible design, the processing module is further configured to obtain network status information.

That a communication module, configured to transmit the first packet on each resource unit RU of a plurality of RUs if the service type of the first packet is a first service includes: transmitting the first packet on each RU of the plurality of RUs based on the network status information if the service type of the first packet is the first service.

The network status information includes any one or more pieces of the following information: a packet loss rate, an interference value, and a retransmission rate.

In a possible design, the plurality of RUs used to transmit the first packet are different when packet loss rates are in different ranges; and/or the plurality of RUs used to transmit the first packet are different when interference values are in different ranges; and/or the plurality of RUs used to transmit the first packet are different when retransmission rates are in different ranges.

In a possible design, a quantity of RUs used to transmit the first packet is a first quantity when the packet loss rate is a first packet loss rate; or the quantity of RUs used to transmit the first packet is a second quantity when the packet loss rate is a second packet loss rate, where the first quantity is greater than the first quantity, and the first packet loss rate is greater than the second packet loss rate; and/or
the quantity of RUs used to transmit the first packet is a third quantity when the interference value is a first interference value; or the quantity of RUs used to transmit the first packet is a fourth quantity when the interference value is a second interference value, where the third quantity is greater than the fourth quantity, and the first interference value is greater than the second interference value; and/or
the quantity of RUs used to transmit the first packet is a fifth quantity when the retransmission rate is a first retransmission rate; or the quantity of RUs used to transmit the first packet is a sixth quantity when the retransmission rate is a second retransmission rate, where the fifth quantity is greater than the sixth quantity, and the first retransmission rate is greater than the second retransmission rate.

In a possible design, the electronic device further includes: an input module, configured to receive a setting instruction entered by a user, and the setting instruction is used to set the first service and/or set the second service.

In a possible design, the first service includes any one or more of the following services: a game, an online course, instant messaging, live streaming, red packet grabbing, projection, an Internet of Things service, and an industrial Internet of Things service. In other words, for low-delay services such as the online course and the instant messaging, a same packet may be transmitted on a plurality of RUs to improve redundancy, so that reliability can be improved and transmission delay can be reduced.

In a possible design, the second service includes a file upload service and a file download service.

According to a fourth aspect, an electronic device is provided, including:
a processing module, configured to: identify a service type of a first packet, and identify service types of a plurality of second packets; and
a communication module, configured to: transmit the first packet on each frequency band of a plurality of frequency bands if the service type of the first packet is a first service; and transmit the plurality of second packets on the plurality of frequency bands if service types of the plurality of second packets are second services.

Second packets transmitted on different frequency bands of the plurality of frequency bands are different, and the second service is different from the first service.

In a possible design, the processing module is further configured to obtain network status information.

That a communication module, configured to transmit the first packet on each frequency band of a plurality of frequency bands if the service type of the first packet is a first service includes: transmitting the first packet on each frequency band of the plurality of frequency bands based on the network status information if the service type of the first packet is the first service.

The network status information includes any one or more pieces of the following information: a packet loss rate, an interference value, and a retransmission rate.

In a possible design, the plurality of frequency bands used to transmit the first packet are different when packet loss rates are in different ranges; and/or the plurality of frequency bands used to transmit the first packet are different when interference values are in different ranges; and/or the plurality of frequency bands used to transmit the first packet are different when retransmission rates are in different ranges.

In a possible design, the electronic device further includes: an input module, configured to receive a setting instruction entered by a user, and the setting instruction is used to set the first service and/or set the second service.

In a possible design, the first service includes any one or more of the following services: a game, an online course, instant messaging, live streaming, red packet grabbing, projection, an Internet of Things service, and an industrial Internet of Things service.

In a possible design, the second service includes a file upload service and a file download service.

According to a fifth aspect, an electronic device is provided, including a processor, a memory, and a Wi-Fi module, where the memory and the Wi-Fi module are coupled to the processor. The memory is configured to store computer program code; the computer program code includes computer instructions; and when the processor reads the computer instructions from the memory, the electronic device is enabled to perform the method according to any one of the foregoing aspects and the possible implementations of the foregoing aspects.

According to a sixth aspect, an apparatus is provided. The apparatus is included in an electronic device, and the apparatus has a function of implementing behavior of the electronic device in any method according to any one of the foregoing aspects and the possible implementations of the foregoing aspects. The function may be implemented by hardware, or may be implemented by hardware executing corresponding software. The hardware or the software includes at least one module or unit corresponding to the foregoing function, for example, a communication module or unit and a control module or unit.

According to a seventh aspect, a computer-readable storage medium is provided, including computer instructions. When the computer instructions are run on an electronic device, the electronic device is enabled to perform the method according to any one of the foregoing aspects and the possible implementations of the foregoing aspects.

According to an eighth aspect, a computer-readable storage medium is provided, including computer instructions. When the computer instructions are run on an electronic device, the electronic device is enabled to perform the method according to any one of the foregoing aspects and the possible implementations of the foregoing aspects.

According to a ninth aspect, a computer program product is provided. When the computer program product is run on a computer, the computer is enabled to perform the method according to any one of the foregoing aspects and the possible implementations of the foregoing aspects.

According to a tenth aspect, a chip system is provided, including a processor. When the processor executes instructions, the processor is enabled to perform the method according to any one of the foregoing aspects and the possible implementations of the foregoing aspects.

### BRIEF DESCRIPTION OF DRAWINGS

FIG. 1 is a schematic diagram of a structure of a communication system according to an embodiment of this application;
FIG. 2 is a schematic diagram of a structure of a first electronic device according to an embodiment of this application;
FIG. 3 is a schematic diagram of a structure of a second electronic device according to an embodiment of this application;
FIG. 4 is a schematic diagram of a resource unit according to an embodiment of this application;
FIG. 5-1 to FIG. 6(4) are schematic diagrams of user interfaces of some terminals according to an embodiment of this application;
FIG. 7 is a schematic flowchart of a data transmission method in a WLAN according to an embodiment of this application;
FIG. 8 is an example diagram of service type division according to an embodiment of this application;
FIG. 9 and FIG. 10 are example diagrams of application scenarios according to an embodiment of this application;
FIG. 11 is a schematic diagram of a frame structure according to an embodiment of this application;
FIG. 12 is a schematic diagram of user interfaces of some terminals according to an embodiment of this application;
FIG. 13 is a schematic flowchart of a data transmission method in a WLAN according to an embodiment of this application;
FIG. 14 is an example diagram of network status information according to an embodiment of this application;
FIG. 15 to FIG. 17 are example diagrams of application scenarios according to an embodiment of this application;
FIG. 18(1) and FIG. 18(2) are an example diagram of a frame structure according to an embodiment of this application;
FIG. 19 is a schematic flowchart of a data transmission method in a WLAN according to an embodiment of this application;
FIG. 20 is an example diagram of an application scenario according to an embodiment of this application;
FIG. 21 to FIG. 23 are schematic flowcharts of a data transmission method in a WLAN according to an embodiment of this application;
FIG. 24 is an example diagram of an application scenario according to an embodiment of this application;
FIG. 25 is a schematic diagram of a core structure of an electronic device according to an embodiment of this application; and
FIG. 26 is a schematic diagram of a structure of a chip system according to an embodiment of this application.

### DESCRIPTION OF EMBODIMENTS

In embodiments of this application, a word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word "example", "for example", or the like is intended to present a related concept in a specific manner.

The terms "first" and "second" mentioned below are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise stated, "a plurality of" means two or more than two.

When using a terminal, a user usually needs to access a network. In some examples, if a modem (Modem) is configured, the terminal may establish a communication connection to a second electronic device through a mobile communication network in a wireless communication connection manner like 2G/3G/4G/5G, to obtain a corresponding service. Alternatively, when a WLAN module is configured, the terminal may also access, through the second electronic device, the Internet or the mobile communication network (or referred to as a mobile network, a mobile data network, or the like) by using the configured WLAN module (for example, a Wi-Fi module) in a connection manner of a wireless local area network (for example, a Wi-Fi network). For example, the terminal establishes a communication connection to a wireless router by using the Wi-Fi technology, and accesses the Internet or the mobile communication network through the wireless router.

Because of low tariff and high network speed, Wi-Fi is preferred for the user to access the network. It can be learned that power consumption of the Wi-Fi module is one of important indicators that affect network access performance of the terminal.

To improve network access performance of the terminal, in embodiments of this application, different processing is performed on packets of different services based on service features. For a packet of a first service, a same packet is transmitted on a plurality of resource units (resource units, RUs). In this way, redundancy of the packet of the first service can be improved, thereby improving transmission reliability of the packet of the first service. It can be learned that, by using the technical solutions in embodiments of this application, transmission performance of the Wi-Fi module can be improved, thereby improving network access experience of the user.

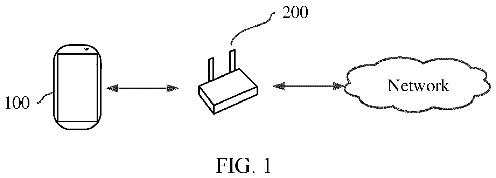

FIG. 1 is a schematic diagram of a structure of a communication system according to an embodiment of this application. The communication system includes a first electronic device 100 and a second electronic device 200.

Optionally, various applications may be installed and run on the first electronic device 100, to provide rich functions for the user. Generally, the first electronic device 100 may access the Internet or the mobile communication network through the second electronic device 200, to communicate with a server corresponding to the applications.

For example, the first electronic device 100 in this application may be a mobile phone, a tablet computer, a personal computer (personal computer, PC), a personal digital assistant (personal digital assistant, PDA), a smartwatch, a netbook, a wearable electronic device, an augmented reality (augmented reality, AR) device, a virtual reality (virtual reality, VR) device, an in-vehicle device, a smart car, a smart sound box, a robot, or the like. A specific form of the first electronic device is not specifically limited in this application. The first electronic device may also be referred to as a terminal.

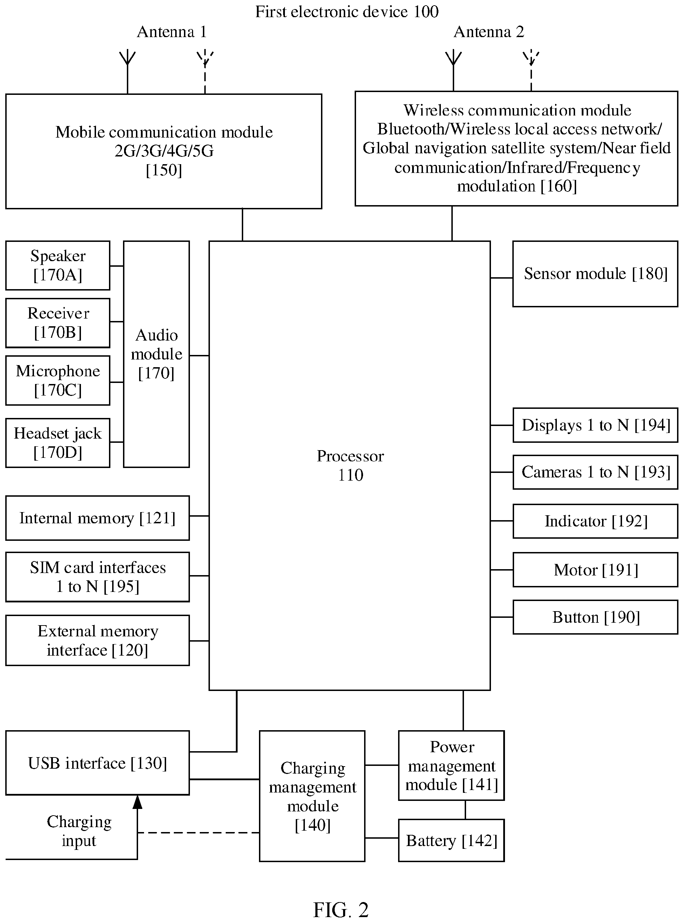

FIG. 2 is a schematic diagram of a structure of the first electronic device 100. The first electronic device 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor, a gyroscope sensor, a barometric pressure sensor, a magnetic sensor, an acceleration sensor, a distance sensor, an optical proximity sensor, a fingerprint sensor, a temperature sensor, a touch sensor, an ambient light sensor (which may detect ambient light brightness), a bone conduction sensor, and the like.

It can be understood that the structure shown in this embodiment of the present invention does not constitute a specific limitation on the first electronic device 100. In some other embodiments of this application, the first electronic device 100 may include more or fewer components than those shown in the figure, or combine some components, or split some components, or have different component arrangements. The components shown in the figure may be implemented by hardware, software, or a combination of software and hardware.

The processor 110 may include one or more processing modules. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a neural-network processing unit (neural-network processing unit, NPU), and/or the like. Different processing modules may be independent components, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache memory. The memory may store instructions or data just used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a bidirectional synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor, a charger, a flash, the camera 193, and the like by using different I2C bus interfaces. For example, the processor 110 may be coupled to the touch sensor through the I2C interface, so that the processor 110 communicates with the touch sensor through the I2C bus interface, to implement a touch function of the first electronic device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to perform audio communication, and sample, quantize, and code an analog signal. In some embodiments, the audio module 170 may be coupled to the wireless communication module 160 through a PCM bus interface. In some embodiments, the audio module 170 may also transmit the audio signal to the wireless communication module 160 through the PCM interface, to implement the function of answering the call through the Bluetooth headset. Both the I2S interface and the PCM interface may be used for audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit the audio signal to the wireless communication module 160 through the UART interface, to implement a function of playing music through the Bluetooth headset.

The MIPI interface may be configured to connect the processor 110 to a peripheral component like the display 194 or the camera 193. The MIPI interface includes a camera serial interface (camera serial interface, CSI), a display serial interface (display serial interface, DSI), and the like. In some embodiments, the processor 110 communicates with the camera 193 through the CSI interface, to implement a photographing function of the first electronic device 100. The processor 110 communicates with the display 194 through the DSI interface, to implement a display function of the first electronic device 100.

The GPIO interface may be configured by software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as the I2C interface, the I2S interface, the UART interface, the MIPI interface, or the like.

The USB interface 130 is an interface that conforms to a USB standard specification, and may be specifically a mini USB interface, a micro USB interface, a USB Type-C interface, or the like. The USB interface 130 may be configured to connect to the charger to charge the first electronic device 100, or may be configured to transmit data between the first electronic device 100 and a peripheral device, or may be configured to connect to a headset for playing audio through the headset. The interface may be further configured to connect to another terminal, for example, the AR device.

It may be understood that, an interface connection relationship between the modules shown in this embodiment of this application is merely an example for description, and does not constitute a structural limitation on the first electronic device 100. In some other embodiments, the first electronic device 100 may alternatively use different interface connection manners in the foregoing embodiment, or use a combination of a plurality of interface connection manners.

The charging management module 140 is configured to receive charging input from the charger. The charger may be a wireless charger or a wired charger. In some embodiments of wired charging, the charging management module 140 may receive charging input of the wired charger through the USB interface 130. In some embodiments of wireless charging, the charging management module 140 may receive wireless charging input through a wireless charging coil of the first electronic device 100. The charging management module 140 may further supply power to the first electronic device 100 by using the power management module 141 while charging the battery 142.

The power management module 141 is configured to connect to the battery 142, the charging management module 140, and the processor 110. The power management module 141 receives input from the battery 142 and/or the charging management module 140, and supplies power to the processor 110, the internal memory 121, the display 194, the camera 193, the wireless communications module 160, and the like. The power management module 141 may be further configured to monitor parameters such as a battery capacity, a battery cycle count, and a battery state of health (electric leakage or impedance). In some other embodiments, the power management module 141 may alternatively be disposed in the processor 110. In some other embodiments, the power management module 141 and the charging management module 140 may alternatively be disposed in a same device.

A wireless communication function of the first electronic device 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the first electronic device 100 may be configured to cover one or more communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 can provide a wireless communication solution that is applied to the first electronic device 100 and that includes 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering or amplification on the received electromagnetic wave, and transmit the electromagnetic wave to the modem processor for demodulation. The mobile communication module 150 may further amplify a signal modulated by the modem processor, and convert the signal into an electromagnetic wave for radiation through the antenna 1. In some embodiments, at least some functional modules in the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium-high frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor and then transmitted to the application processor. The application processor outputs a sound signal by using an audio device (which is not limited to the speaker 170A, the receiver 170B, or the like), or displays an image or a video by using the display 194. In some embodiments, the modem processor may be an independent device. In some other embodiments, the modem processor may be independent of the processor 110, and is disposed in a same device as the mobile communication module 150 or another functional module.

The wireless communication module 160 may provide a wireless communication solution that is applied to the first electronic device 100, and that includes a WLAN (for example, a wireless fidelity (wireless fidelity, Wi-Fi) network), Bluetooth (Bluetooth, BT), a global navigation satellite system (global navigation satellite system, GNSS), frequency modulation (frequency modulation, FM), a near field communication (near field communication, NFC) technology, an infrared (infrared, IR) technology, or the like. The wireless communication module 160 may be one or more components integrating at least one communication processor module. The wireless communication module 160 receives an electromagnetic wave through the antenna 2, performs frequency modulation and filtering processing on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation through the antenna 2.

In some embodiments of this application, the processor 110 is configured to control, based on an RU granularity and a service feature, to perform different processing on packets of different services. For packets of a first service, a same packet is transmitted on a plurality of RUs, to improve redundancy of the packets of the first service, so that transmission reliability of the packets of the first service can be ensured as much as possible.

The processor 110 is further configured to transmit, for packets of non-first services, different packets on the plurality of RUs when there are remaining frequency domain resources in the plurality of RUs, to extend an available bandwidth of the packets of the non-first services.

The processor 110 is further configured to allocate bandwidth to packets of different services based on a frequency band granularity. For the packets of the first service, a same packet is transmitted on a plurality of frequency band resources. When there are remaining frequency domain resources in the plurality of frequency band resources, for the packets of the non-first services, different packets are transmitted on the plurality of frequency band resources.

In some embodiments, the antenna 1 of the first electronic device 100 is coupled to the mobile communication module 150, and the antenna 2 is coupled to the wireless communication module 160, so that the first electronic device 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The first electronic device 100 implements a display function by using the GPU, the display 194, the application processor, and the like. The GPU is a microprocessor for image processing, and is connected to the display 194 and the application processor. The GPU is configured to perform mathematical and geometric computation, and render an image. The processor 110 may include one or more GPUs, which execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the first electronic device 100 may include one or N displays 194, where N is a positive integer greater than 1.

The first electronic device 100 may implement a photographing function by using the ISP, the camera 193, the video codec, the GPU, the display 194, the application processor, and the like.

The ISP is configured to process data fed back by the camera 193. For example, during photographing, a shutter is pressed, light is transferred to a camera photosensitive element through a lens, an optical signal is converted into an electrical signal, and the camera photosensitive element transmits the electrical signal to the ISP for processing, to convert the electrical signal into an image visible to a naked eye. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 is configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the first electronic device 100 may include one or N cameras 193, where N is a positive integer greater than 1.

The digital signal processor is configured to process a digital signal, and may process another digital signal in addition to the digital image signal. For example, when the first electronic device 100 selects a frequency, the digital signal processor is configured to perform Fourier transformation on frequency energy.

The video codec is configured to compress or decompress a digital video. The first electronic device 100 may support one or more video codecs. In this way, the first electronic device 100 may play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by drawing on a structure of a biological neural network, for example, by drawing on a transmission mode between human brain neurons, and may further continuously perform self-learning. An application like intelligent cognition, for example, image recognition, facial recognition, speech recognition, or text understanding of the first electronic device 100 may be implemented by using the NPU.

The external memory interface 120 may be configured to connect to an external memory card, for example, a micro SD card, to expand a storage capability of the first electronic device 100. The external memory card communicates with the processor 110 through the external memory interface 120, to implement a data storage function, for example, store files such as music and a video in the external memory card.

The internal memory 121 may be configured to store computer-executable program code, and the computer-executable program code includes instructions. The internal memory 121 may include a program storage area and a data storage area. The program storage area may store an operating system, an application required by at least one function (for example, a voice playing function or an image playing function), and the like. The data storage area may store data (for example, audio data and an address book) and the like created in a process of using the first electronic device 100. In addition, the internal memory 121 may include a high-speed random access memory, or may include a nonvolatile memory, for example, at least one magnetic disk storage device, a flash memory, or a universal flash storage (universal flash storage, UFS). The processor 110 runs instructions stored in the internal memory 121 and/or instructions stored in the memory disposed in the processor, to perform various function applications of the first electronic device 100 and data processing.

The first electronic device 100 may implement audio functions such as music playing and recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert analog audio input into a digital audio signal. The audio module 170 may be further configured to encode and decode an audio signal. In some embodiments, the audio module 170 may be disposed in the processor 110, or some functional modules in the audio module 170 are disposed in the processor 110.

The speaker 170A, also referred to as a "loudspeaker", is configured to convert an audio electrical signal into a sound signal. The first electronic device 100 may be used to listen to music or answer a call in a hands-free mode through the speaker 170A.

The receiver 170B, also referred to as an "earpiece", is configured to convert an audio electrical signal into a sound signal. When a call is answered or voice information is received through the first electronic device 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input a sound signal to the microphone 170C. At least one microphone 170C may be disposed in the first electronic device 100. In some other embodiments, two microphones 170C may be disposed in the first electronic device 100, to collect a sound signal and implement a noise reduction function. In some other embodiments, three, four, or more microphones 170C may alternatively be disposed in the first electronic device 100, to collect a sound signal, implement noise reduction, and identify a sound source, to implement a directional recording function and the like.

The headset jack 170D is configured to connect to a wired headset. The headset jack 170D may be the USB interface 130, or may be a 3.5 mm open mobile terminal platform (open mobile terminal platform, OMTP) standard interface or a cellular telecommunications industry association of the USA (cellular telecommunications industry association of the USA, CTIA) standard interface.

The button 190 includes a power button, a volume button, and the like. The button 190 may be a mechanical button, or may be a touch button. The first electronic device 100 may receive a button input, and generate a button signal input related to a user setting and function control of the first electronic device 100.

The motor 191 may generate a vibration prompt. The motor 191 may be configured to provide an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with and separation from the first electronic device 100. The first electronic device 100 may support one or N SIM card interfaces, where N is a positive integer greater than 1. The SIM card interface 195 may support a nano-SIM card, a micro-SIM card, a SIM card, and the like. A plurality of cards may be inserted into a same SIM card interface 195 at the same time. The plurality of cards may be of a same type or different types. The SIM card interface 195 may be compatible with different types of SIM cards. The SIM card interface 195 is also compatible with an external memory card. The first electronic device 100 interacts with a network through the SIM card, to implement a call function, a data communication function, and the like. In some embodiments, the first electronic device 100 uses an eSIM, namely, an embedded SIM card. The eSIM card may be embedded in the first electronic device 100, and cannot be separated from the first electronic device 100.

The second electronic device 200 in this application is a device that may provide a wireless network access function for the first electronic device 100, for example, a wireless router or a customer premises equipment (Customer Premise Equipment, CPE).

It should be noted that for a structure of the second electronic device 200, refer to the structure of the first electronic device 100 in FIG. 2. The second electronic device 200 may have more or fewer components than the structure shown in FIG. 2, or combine some components, or split some components, or have different component arrangements. The components shown in the figure may be implemented by hardware, software, or a combination of software and hardware.

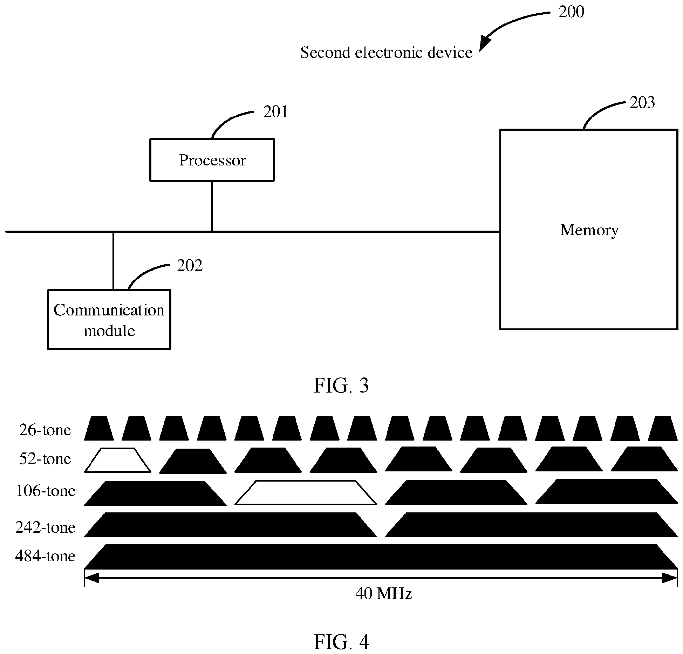

For example, when the second electronic device 200 is a router, as shown in FIG. 3, the second electronic device 200 may include a processor 201, a memory 203, a communication module 202, an antenna (not shown in FIG. 3), a power module (not shown in FIG. 3), and the like. The communication module includes a Wi-Fi module, a network access module configured to connect to the Internet, and the like. The Wi-Fi module may be configured to establish a Wi-Fi connection to the first electronic device 100. In this way, the first electronic device 100 may access the Internet by using the network access module of the second electronic device 200.

For other content, refer to descriptions of related structures of the first electronic device 100 in FIG. 2. Details are not described herein.

All technical solutions in the following embodiments may be implemented on the first electronic device 100 that has the foregoing hardware architecture and software architecture.

The following describes in detail the technical solutions provided in embodiments of this application with reference to the accompanying drawings by using an example in which a first electronic device is the first electronic device 100 shown in FIG. 1, and a second electronic device is the second electronic device 200 shown in FIG. 1.

First, a frequency domain resource used for WLAN transmission in embodiments of this application is described.

In embodiments of this application, a unit of frequency domain resource scheduling may be a resource unit (resource unit, RU). The RU is a frequency domain scheduling unit in an orthogonal frequency division multiple access (orthogonal frequency division multiple access, OFDMA) technology introduced in the Wi-Fi 6 standard, namely, the 802.11ax protocol. 80 MHz and 160 MHz frequency bands may be divided into RU combinations in different granularities, such as an RU combination of a 26-tone RU, a 52-tone RU, a 106-tone RU, a 242-tone RU, a 484-tone RU, a 996-tone RU, and a 2x996-tone RU. In X-tone, "X" indicates a quantity of tones. For example, 52-tone indicates 52 tones. X tones include Y data tones and Z pilot tones. For example, 52-tone indicates 52 tones, including 48 data tones and 4 pilot tones.

Using a 40 MHz bandwidth as an example, the 40 MHz bandwidth may be divided into RU combinations in different granularities. As shown in FIG. 4, the 40 MHz bandwidth may be divided into 16 26-tone RUs (a bandwidth of each 26-tone RU is 2.5 MHz), or divided into eight 52-tone RUs (a bandwidth of each 52-tone RU is 5 MHz), or divided into four 106-tone RUs (a bandwidth of each 106-tone is 10 MHz), or divided into two 242-tone RUs (a bandwidth of each 242-tone RU is 20 MHz), or may be one 484-tone RU (a bandwidth of each 484-tone RU is 40 MHz).

In this embodiment of this application, in an OFDMA scheduling period, one electronic device (the first electronic device or the second electronic device) may occupy a plurality of RUs (multi-RU) to send data.

The plurality of RUs occupied by the one electronic device may be a plurality of continuous RUs, or some of the plurality of RUs are continuous, and some of the plurality of RUs are discontinuous, or all of the plurality of RUs are discontinuous.

For example, FIG. 4 shows one 52-tone RU (as shown in white padding) and one 106-tone RU occupied by the first electronic device (or the second electronic device) in one OFDMA scheduling period. It can be learned that the two RUs are discontinuous RUs.

For example, the first electronic device is a transmit end, and the second electronic device is a receive end. In this embodiment of this application, the first electronic device (for example, a mobile phone) may transmit a same data packet on the plurality of RUs. Correspondingly, the second electronic device (for example, a router) may perform deduplication on the data packet.

In this way, packet redundancy is improved. When there is interference, even if a packet loss occurs in a packet transmitted on an RU, normal transmission of a packet on another RU is not affected or is affected at a low probability. This can reduce a packet loss rate, improve packet transmission reliability, reduce a retransmission probability of the data packet, and reduce a delay of the data packet. It can be learned that the method can improve WLAN transmission performance.

For example, a mobile phone 1 sends a same packet of a short video application (for example, TikTok) by using three RUs: an RU 1, an RU 2, and an RU 3. Specifically, a packet whose sequence number is 1 (Seq=1) and a packet whose sequence number is 2 (Seq=2) are sent on the RU 1, the packet whose sequence number is 1 (Seq=1) and the packet whose sequence number is 2 (Seq=2) are sent on the RU 2, and the packet whose sequence number is 1 (Seq=1) and the packet whose sequence number is 2 (Seq=2) are sent on the RU 3.

For another example, a mobile phone 1 sends a same packet of a short video application (for example, TikTok) and a same packet of red packet grabbing by using two RUs: an RU 1 and an RU 2. Specifically, a TikTok packet whose Seq is from 1 to 3 and a red packet grabbing packet whose Seq is from 1 to 2 are sent on the RU1. The mobile phone 1 sends, on the RU 2, the TikTok packet whose Seq is from 1 to 3 and the red packet grabbing packet whose Seq is from 1 to 2.

In this embodiment of this application, that a same packet is transmitted by using a plurality of RUs may be referred to as multi-RU concurrent sending (or multi-RU multi-sending).

It should be noted that a quantity of concurrent RUs is n, and n is a natural number greater than 1. The quantity of concurrent RUs is not limited in this embodiment of this application.

The sequence number mentioned in this embodiment of this application is merely an example, and a specific value of the sequence number is not limited.

Optionally, during multi-RU concurrent sending, a same packet transmitted by using the plurality of RUs is a packet of a first service. Optionally, the first service meets one or more of the following features: a low delay requirement and a high reliability requirement.

For example, the first service includes any one or more of the following services: a game, an online course, instant messaging, red packet grabbing, live streaming, projection, an Internet of Things service, and an industrial Internet of Things service.

In some other embodiments, based on multi-RU concurrent sending, in addition to frequency domain resources used to transmit the same packet of the first service, if there are remaining frequency domain resources in each RU of the plurality of RUs, the remaining frequency domain resources may be used to transmit a packet of a second service. For example, the mobile phone 1 sends a packet 1 on both the RU 1 whose bandwidth is 20 MHz and the RU 2 whose bandwidth is 20 MHz, and the packet 1 occupies a frequency domain resource of 10 MHz in both the RU 1 and the RU 2. In this case, a remaining frequency domain resource of 10 MHz in the RU 1 and a remaining frequency domain resource of 10 MHz in the RU 2 may be used to send the packet of the second service, to improve resource utilization.

Optionally, the second service may be a high-bandwidth service. A high bandwidth may be a specified bandwidth range. The specific bandwidth range of the large bandwidth is not limited in this embodiment of this application.

For example, the second service includes but is not limited to a file download service and a file upload service. File download can be large file download, and file upload can be large file upload. A large file may be a file with a set size range, for example, a file whose size is greater than 1 GB is set to be a large file. A specific size range of the large file is not limited in this embodiment of this application.

Optionally, the packet of the second service is transmitted in an aggregated manner on the plurality of RUs. This means that packets of the second service transmitted by each RU of the plurality of RUs are different. The foregoing example is still used. 10 MHz in the RU1 and the RU2 are both used to send the same packet 1 and the same packet 2 of the short video application (for example, TikTok). For the remaining frequency domain resource of 10 MHz in the RU1 and the RU2, the remaining 10 MHz in the RU1 may be used to upload a large file packet 1 to a large file packet 10, and the remaining 10 MHz in the RU2 may be used to upload a large file packet 11 to a large file packet 20. The large file packet transmitted by using the RU1 is different from the large file packet transmitted by using the RU2. In this way, the remaining frequency domain resource is fully utilized, so that an available bandwidth range of the high-bandwidth service can be extended, and a remaining bandwidth is used to transmit a packet of the high-bandwidth service as much as possible. This improves transmission performance of the high-bandwidth service.

In this embodiment of this application, the same packet of the first service is concurrently transmitted by using some frequency domain resources of each RU of the plurality of RUs, and different packets of the second service are transmitted, in the aggregated manner, by using the other frequency domain resources of each RU. This may be referred to as active/standby multi-RU sending.

In some other embodiments, in a scenario in which the second electronic device (for example, a router) supports providing Wi-Fi services on a plurality of frequency bands such as 2.4 GHz, 5 GHz, and 6 GHz, a packet may be transmitted on the plurality of frequency bands. In this scenario, an embodiment of this application provides a multi-frequency active/standby sending solution. Specifically, the same packet of the first service may be concurrently transmitted by using some frequency domain resources in each of a plurality of frequency bands, and different packets of the second service may be transmitted, in the aggregated manner, by using the other frequency domain resources in each frequency band. For example, the mobile phone 1 supports and communicates by using two frequency bands: 5 GHz and 2.4 GHz. The 5 GHz frequency band is used to transmit a TikTok packet 1 and a TikTok packet 2, and the 5 GHz frequency band is further used to upload large file packets 1 to 200. The 2.4 GHz frequency band is used to transmit the TikTok packet 1 and the TikTok packet 2, and the 2.4 GHz frequency band is further used to transmit large file packets 201 to 400. Optionally, there may be remaining frequency domain resources in the 5 GHz frequency band and the 2.4 GHz frequency band, and the remaining frequency domain resources may be used to transmit another packet.

In some embodiments of this application, the first electronic device and the second electronic device may always enable a first function by default. The first function is the foregoing function that enhances WLAN transmission performance. The first electronic device and the second electronic device may always use the method provided in this embodiment of this application by default, to provide a WLAN transmission enhancement function for the first electronic device and the second electronic device. In this way, WLAN transmission performance can be improved without user awareness.

WLAN transmission performance enhancement may refer to improving packet transmission reliability and reducing a transmission delay in a WLAN transmission process mentioned above. Alternatively, it may refer to the foregoing mentioned increase of an available bandwidth for large traffic in the WLAN transmission process.

Alternatively, in some other embodiments, the first electronic device is used as an example. A switch may be set in the first electronic device, and a user may manually enable or disable, by using the switch, a function that is provided in this embodiment of this application and that is for improving WLAN transmission performance of the first electronic device. The WLAN transmission enhancement function includes one or more of a multi-RU concurrent sending function, a multi-RU active/standby sending function, or a multi-frequency active/standby sending function.

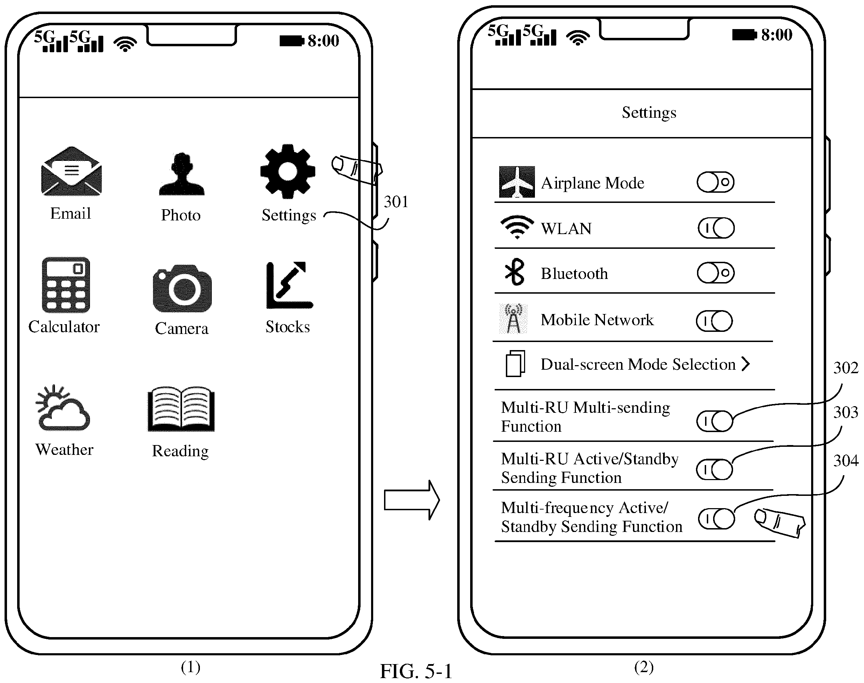

For example, as shown in (1) and (2) in FIG. 5-1, a switch control 302 to a switch control 304 may be set on a setting page of a "Settings" application. The switch control 302 is used by the user to enable the multi-RU concurrent sending function by entering a setting instruction. The switch control 303 is used by the user to enable or disable the multi-RU active/standby sending function. The switch control 304 is used by the user to enable or disable the multi-frequency active/standby sending function.

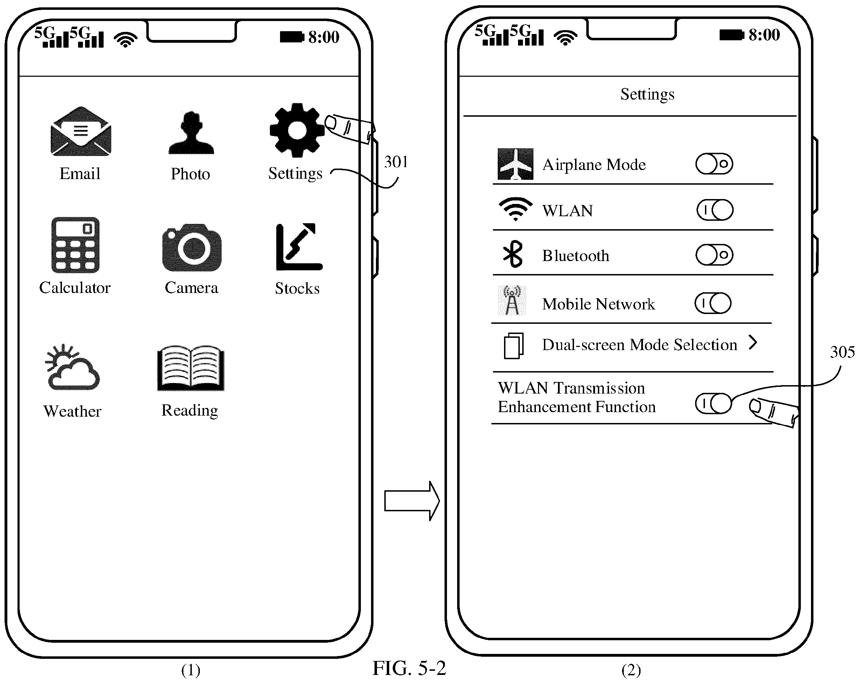

For example, as shown in (1) and (2) in FIG. 5-2, a switch control 305 may be set on the setting page of the "Settings" application for the user to enable or disable the WLAN transmission enhancement function provided in this embodiment of this application.

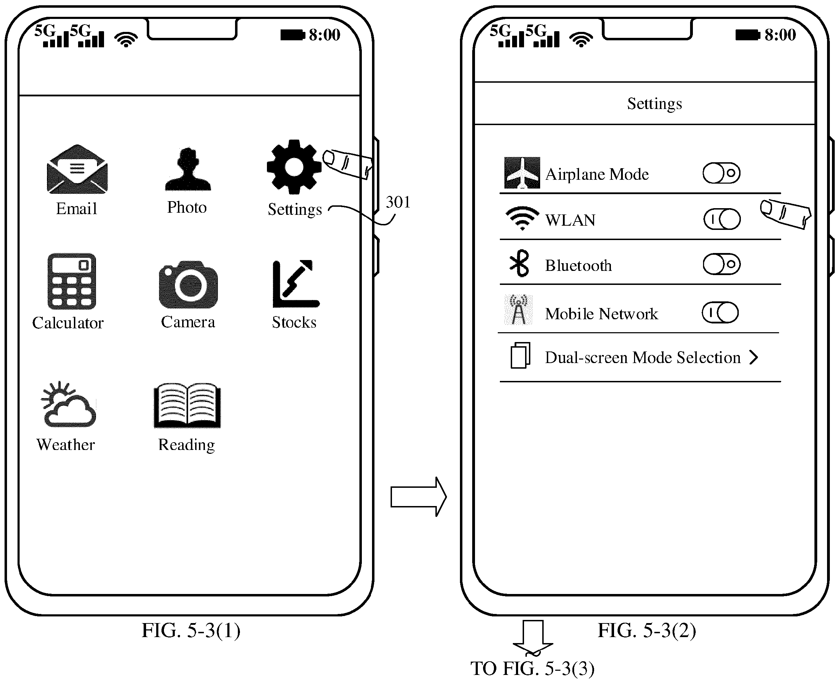

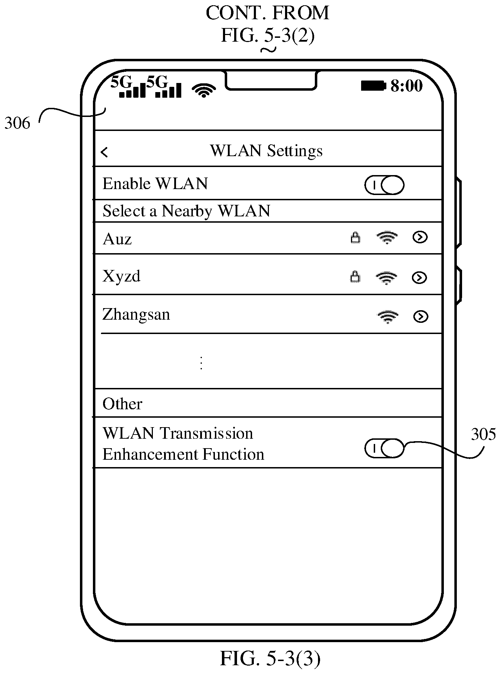

For another example, as shown in FIG. 5-3(1), in response to a tap operation performed by the user on a setting application 301, the first electronic device displays a setting interface shown in FIG. 5-3(2), and in response to a tap operation performed by the user on a WLAN switch on the setting interface, the first electronic device displays a WLAN setting interface shown in FIG. 5-3(3). The WLAN setting interface includes the switch 305, which may be used to enable or disable the WLAN transmission performance enhancement function provided in this embodiment of this application.

For another example, the WLAN transmission performance enhancement function is enabled on setting interfaces of different applications. For example, the WLAN transmission performance enhancement function is enabled on a setting interface of the Honor of Kings application.

Alternatively, in some other embodiments, the first electronic device and the second electronic device use the method provided in this embodiment of this application in a first preset scenario, to improve WLAN transmission performance of the first electronic device and the second electronic device. The first preset scenario may include but is not limited to the following single scenario or a combination of a plurality of scenarios: The first electronic device starts a preset application, that a packet loss rate is greater than a packet loss rate threshold is detected, that a retransmission rate is greater than a retransmission rate threshold is detected, and that an interference value is greater than an interference value threshold is detected.

The preset application is an application of a low-delay service, for example, an instant messaging application or a game application. The preset application may be set by the first electronic device, or may be set by the user.

In this embodiment of this application, after the first preset scenario is detected by the first electronic device, the first electronic device may automatically enable the WLAN transmission performance enhancement function, or prompt the user to enable the WLAN transmission performance enhancement function.

Alternatively, in some other embodiments, after an operation used to enable a Wi-Fi function (for example, enabling a Wi-Fi switch) is detected by the first electronic device, the first electronic device may automatically enable or prompt the user to enable a function for improving WLAN transmission performance. In some examples, after the Wi-Fi function is enabled, a Wi-Fi icon may be displayed in a status bar of the first electronic device, for example, a Wi-Fi icon 306 shown in FIG. 5-3(3).

A specific method of enabling the function for improving WLAN transmission performance is not limited in this embodiment of this application.

In some other embodiments, the user or the first electronic device may set an application for which the WLAN transmission enhancement function is enabled. For the application for which the WLAN transmission enhancement function is enabled, the data transmission method in the WLAN provided in this embodiment of this application may be used to improve transmission performance of the application in a process of transmitting (for example, sending and/or receiving) a packet.

Optionally, the first electronic device enables the WLAN transmission enhancement function for applications of some service types by default.

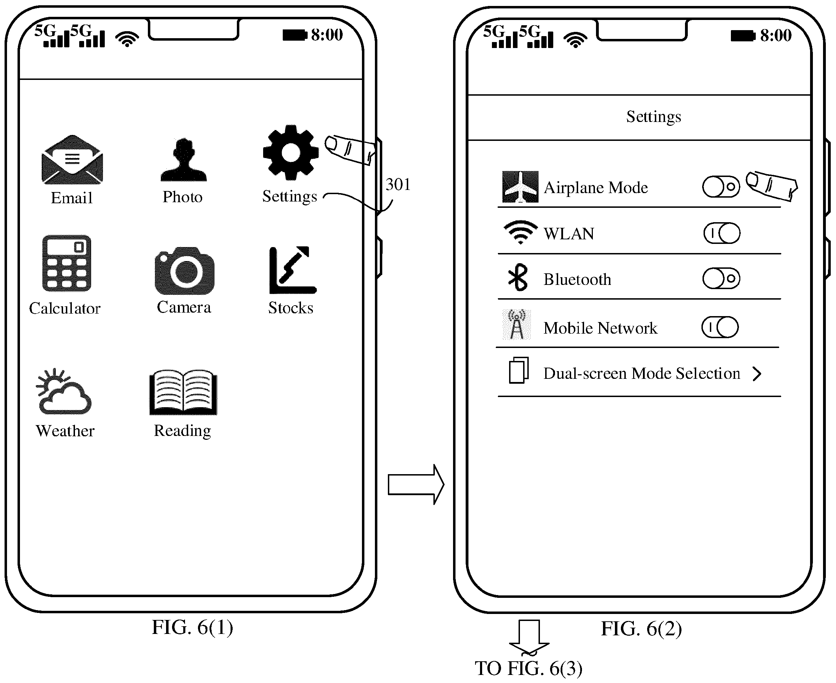

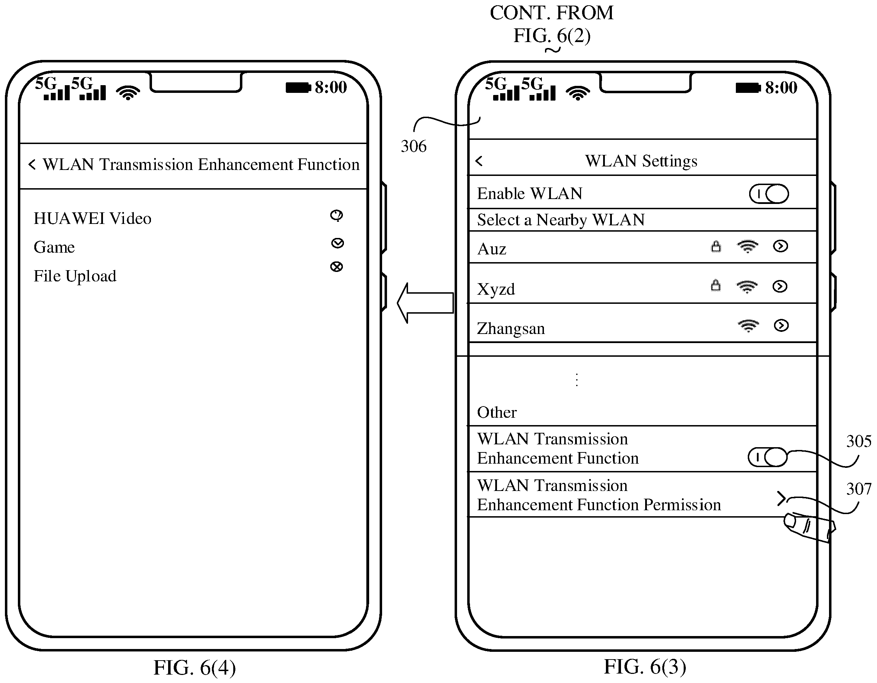

Alternatively optionally, the first electronic device provides a setting entry for the user, and the user sets and selects an application to enable the WLAN transmission enhancement function. For example, refer to FIG. 6(1) to FIG. 6(3). The user may enable the WLAN transmission enhancement function by performing an operation like enabling the switch 305, and trigger, for example, by tapping the control 307 shown in FIG. 6(3), the mobile phone to display a permission setting interface shown in FIG. 6(4). The user may set different permissions for different applications. For example, as shown in FIG. 6(4), for a game application, 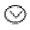 indicates that the user enables the WLAN transmission enhancement function for the game application. For a file upload (for example, a web disk) application, 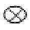 indicates that the user disables the WLAN transmission enhancement function for the file upload application. For HUAWEI Video, 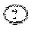 indicates whether to enable the WLAN transmission enhancement function. To be specific, before a packet of HUAWEI Video is received, the user may be asked whether to enable the WLAN transmission enhancement function.

Optionally, the first electronic device may separately provide a setting entry of an application of the first service and a setting entry of an application of the second service, and the user may set the first service and/or the second service by entering a setting instruction. For example, the first electronic device provides a setting interface of an application of the low-delay service, for the user to select the application of the low-delay service. Subsequently, for a packet of the application selected by the user, a same packet is transmitted on a plurality of frequency domain resources (which may be RU granularities or frequency band granularities), to reduce a packet transmission delay. The first electronic device further provides a setting interface of an application of the high-bandwidth service, for the user to select the application of the high-bandwidth service. Subsequently, for a packet of the application selected by the user, different packets are transmitted on the plurality of frequency domain resources (which may be RU granularities or frequency band granularities), to extend or increase an available bandwidth of the packet.

Alternatively optionally, the first electronic device provides one of the setting entry of the application of the first service and the setting entry of the application of the second service.

Alternatively optionally, the first electronic device provides a hybrid setting entry of the application of the first service and the application of the second service. The hybrid setting entry is used by the user to select applications for which the WLAN transmission enhancement function is expected to be enabled, such as applications of low-delay services and/or applications of high-bandwidth services. For example, the user chooses Baidu file upload, (extending an available bandwidth is expected and has a low delay requirement), TikTok, and game applications (a low delay is expected) are applications for which the WLAN transmission enhancement function is expected to be enabled.

Optionally, the first electronic device may further provide a service setting entry in an application, and the user may select a service for which the WLAN transmission enhancement function is expected to be enabled. For example, the user selects a red packet grabbing service and a voice call service of WeChat as services for which the WLAN transmission enhancement function is expected to be enabled. For another example, the user may further select the red packet grabbing service and the voice call service of WeChat as services for which a low delay is expected. The user may select a file service as the service for which the available bandwidth is expected to be extended.

It should be noted that the foregoing setting entry that is provided by the first electronic device for the user and that is used to set the application for which the WLAN transmission enhancement function is enabled is merely an example, and the setting entry (including but not limited to setting by using an interface) may be another setting entry.

The foregoing mainly uses the first electronic device as an example to describe the method for enabling the WLAN transmission enhancement function of the first electronic device. In some other embodiments, the second electronic device may also set and enable the WLAN transmission enhancement method by using a similar method, to enhance downlink transmission performance.

A prerequisite of the technical solutions of embodiments of this application is that the first electronic device establishes a Wi-Fi connection to the second electronic device. On this basis, if the WLAN transmission enhancement function is enabled on the first electronic device and the second electronic device, Wi-Fi connection performance can be optimized. For example, reliability of Wi-Fi connection transmission can be improved.

In some embodiments, the user may actively enable the Wi-Fi function of the first electronic device. In some other embodiments, if the Wi-Fi function is not enabled currently (for example, a Wi-Fi switch is not enabled), after the first electronic device automatically enables the function for improving WLAN transmission performance or the user manually enables the function for improving WLAN transmission performance, the first electronic device may automatically enable or prompt the user to enable the Wi-Fi function of the first electronic device, and establish the Wi-Fi connection to the second electronic device. Alternatively, in another scenario, the first electronic device enables the Wi-Fi function, and establishes the Wi-Fi connection to the second electronic device.

If the first electronic device establishes the Wi-Fi connection to the second electronic device for an initial time, the user needs to select a Wi-Fi name corresponding to the second electronic device, enter a password, and the like, or use another manner like scanning a QR code, to establish the Wi-Fi connection between the first electronic device and the second electronic device. If the first electronic device establishes the Wi-Fi connection to the second electronic device for a non-initial time, and the first electronic device stores information such as the Wi-Fi name and the password that are corresponding to the second electronic device, the first electronic device may automatically establish the Wi-Fi connection to the second electronic device.

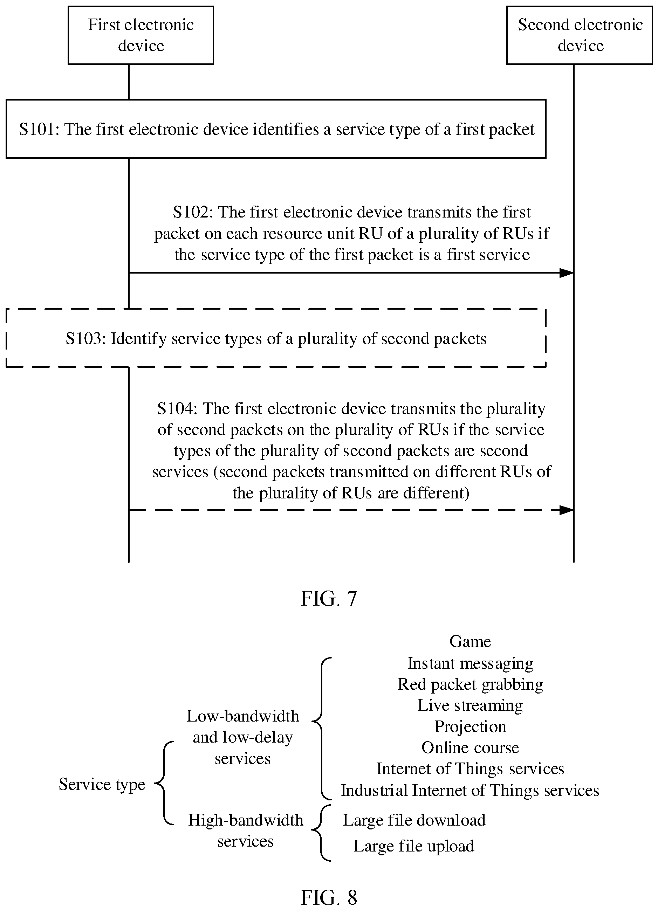

On a condition that the Wi-Fi connection is established and the WLAN transmission enhancement function is enabled, a method for data transmission in a WLAN provided in an embodiment of this application may be started to be performed. As shown in FIG. 7, the method may include the following steps.

S101: A first electronic device identifies a service type of a first packet.

Optionally, a Wi-Fi module (for example, a Wi-Fi chip) in the first electronic device is configured to identify a service type of a packet.

The service type includes but is not limited to a first service (for example, a low-bandwidth and low delay service shown in FIG. 8) and a second service (for example, a high-bandwidth service shown in FIG. 8).

Generally, packets with different features may belong to different services, and packet features of different services may be different. In consideration of the feature, in this embodiment of this application, that the first electronic device identifies the service type of the to-be-sent packet may be implemented as follows: The first electronic device identifies a feature of the to-be-sent packet, and identifies the service type of the to-be-sent packet based on the feature of the to-be-sent packet. The feature of the packet includes but is not limited to one or more of the following features: a source Internet Protocol (Internet protocol, IP) address, a destination IP address, a protocol number, a source port, a destination port, a traffic feature, and an Ethernet type of the packet.

In this embodiment of this application, packet features of different service types may be determined. Subsequently, when the to-be-sent packet exists in the first electronic device, the first electronic device compares the feature of the to-be-sent packet with a packet feature of the first service. If the feature of the to-be-sent packet matches the packet feature of the first service, it indicates that the to-be-sent packet is the packet of the first service, and the service type of the to-be-sent packet is the first service. If the feature of the to-be-sent packet matches a packet feature of the second service, it indicates that the to-be-sent packet is the packet of the second service, and the service type of the to-be-sent packet is the second service. For example, if the to-be-sent packet exists currently, and the feature of the to-be-sent packet matches a packet feature of TikTok, it indicates that the first electronic device identifies that the to-be-sent packet is a TikTok packet.

In a possible implementation, the packet features of different services may be determined based on an application whitelist. Using determining the packet feature of the first service as an example, an application whitelist is set in the first electronic device, and an application in the application whitelist is an application of the first service. For example, the application in the application whitelist includes but is not limited to one or more of the following applications: a game application (for example, Honor of Kings or League of Legends), an online course (for example, NetEase U-course), instant messaging (such as WeChat or MeeTime), and a live streaming application (for example, TikTok).

The game application Honor of Kings is used as an example. When the Honor of Kings application in the mobile phone is started, one or more processes of the Honor of Kings application are started, and the mobile phone identifies one or more process identifiers (process identifier, PID) of the Honor of Kings application. When the process needs to perform communication by using a network, the process may request a system to create a socket, and the process performs interprocess communication externally by using the created socket. A quintuple feature of the socket may be a source IP address, a destination IP address, a protocol number, a source port, and a destination port. One or more features in the quintuple feature of the socket created by the process may be considered as a feature of a service packet of the Honor of Kings application.

It should be noted that an application whitelist of the first service may be set by the first electronic device, or as shown in FIG. 6(1) to FIG. 6(4), the application whitelist of the first service is set by the user.

It should be further noted that a feature of the PID is not limited to one or more features in the quintuple feature, and may be, for example, one or more features in a triplet feature. This is not limited in this embodiment of this application. Correspondingly, the packet feature of the first service may also be one or more features in the quintuple feature, or one or more features in the triplet feature, or is not limited to another feature.

Optionally, the first electronic device may send the packet features of different services to the second electronic device. For example, the first electronic device is a mobile phone, and the second electronic device is a router. After identifying a feature of a packet transmitted by the Honor of Kings application, the mobile phone sends the feature to the router. In this way, the router may perform feature matching on a downlink packet based on the received feature information, to identify a service type of the downlink packet.

Optionally, the packet features of different services are sent to the router through a first message. For example, the first message is a HiLink message or another private message.

In a possible implementation, the packet features of different services may be determined based on a port number.

For example, the packet features of different services may be determined based on port numbers registered by the services in the Internet digital distribution agency (the Internet assigned numbers authority, IANA). A destination port number of a packet of a web page browsing service is 80. A destination port number of an encrypted, by the hyper text transfer protocol secure (hyper text transfer protocol over secure socket layer, HTTPS), packet of the web page browsing service is 443. A destination port number of a packet of a mail service is 110.

For another example, an application vendor may customize port numbers of different function services. For example, a port number of the red packet grabbing service is set to 5000.

In another possible implementation, the packet features of different services may be determined based on traffic. For example, based on analysis of packet traffic of different services, it is determined that packet traffic of the Internet of Things (Internet of things, IoT) service is generally less than 100 kbps, and packet traffic of the game service is in a range of 100 kbps to 2 Mbps.

In some embodiments, that the first electronic device performs matching between the feature of the to-be-sent packet and a packet feature of a preset service may be performing feature matching by using deep packet inspection (deep packet inspection, DPI), to identify the service type of the to-be-sent packet. Specifically, the first electronic device deeply reads payload of the to-be-sent packet, and reassembles, for example, application layer information in OSI (open system interconnection) 7-layer protocol, to obtain a series of features of the to-be-sent packet.

After obtaining the feature of the to-be-sent packet, the first electronic device matches the feature of the to-be-sent packet with packet features of one or more preset services, to perform traffic classification on the to-be-sent packet, that is, identify the service type of the to-be-sent packet.

For example, if the first electronic device monitors traffic of the to-be-sent packet by using the DPI, and that the traffic of the to-be-sent packet is in a range of 100 kbps to 2 Mbps is determined, the first electronic device may determine that the to-be-sent packet is a packet of the game service.

For another example, if the first electronic device reads a quintuple feature of the to-be-sent packet by using the DPI, and that the quintuple feature of the to-be-sent packet meets a feature of the TikTok packet is determined, the first electronic device may determine that the to-be-sent packet is the TikTok packet.

In some other embodiments, that the first electronic device performs matching between the feature of the to-be-sent packet and the packet feature of the preset service may be performing feature matching by using an access control list (access control list, ACL) based on layer 2, layer 3, and layer 4 information of the packet, to identify the service type of the to-be-sent packet.

It should be noted that, when the first electronic device performs matching between the feature of the to-be-sent packet and the packet feature of the preset service, if there are a plurality of features of the preset services, an execution sequence of matching is not limited in this embodiment of this application. The first electronic device may perform matching on the features one by one. For example, the first electronic device first performs matching on one feature, and when the feature does not match the feature of the to-be-sent packet, the first electronic device performs matching on a next feature. Alternatively, matching may be performed on the plurality of features at the same time, to improve matching efficiency.

The foregoing enumerated packet features and the method for identifying the service type based on the packet feature are merely examples. This embodiment of this application is limited to space, and identification methods for the packet feature and the packet service type are not listed one by one.

S 102: The first electronic device transmits the first packet on each RU of a plurality of RUs if the service type of the first packet is the first service.

Optionally, after identifying that the service type of the first packet is the first service, the Wi-Fi module may report an identification result to the processor, and the processor triggers and controls, based on the identification result, transmission of the first packet on the plurality of RUs.

In this embodiment of this application, if it is determined that the to-be-sent packet is the packet of the first service, the first electronic device sends the to-be-sent packet in a multi-RU concurrent sending manner. In other words, the first electronic device transmits the to-be-sent packet on each RU of the plurality of RUs. In this way, a probability of retransmitting the packet of the first service may be reduced by increasing redundancy, to reduce a delay of the first service.

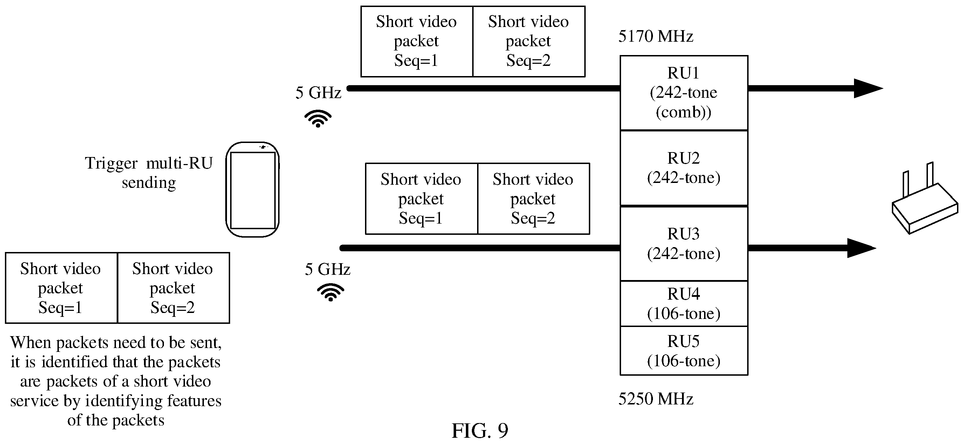

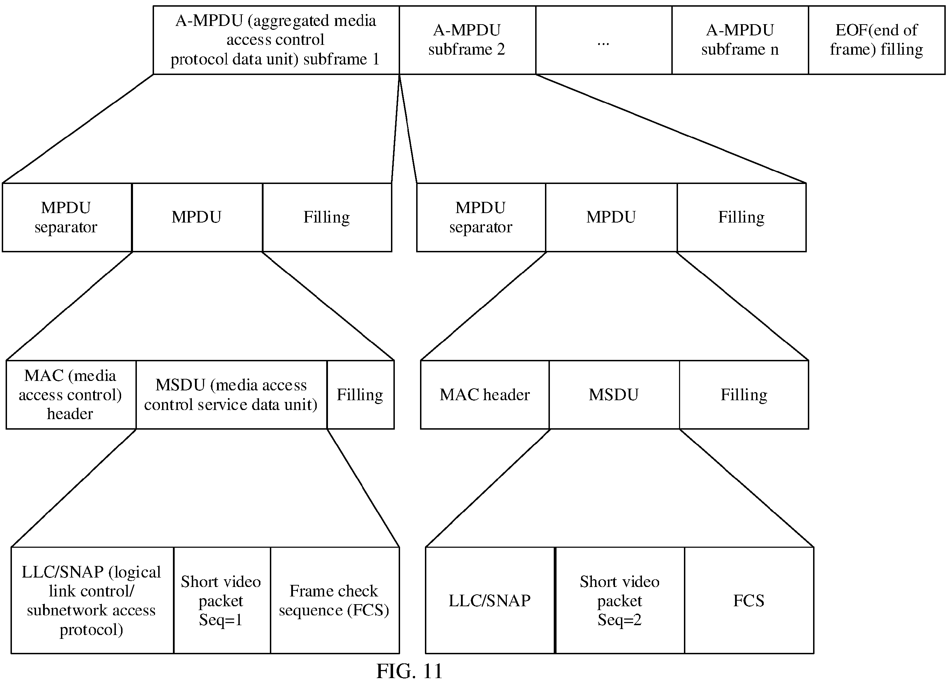

An example in which the first electronic device is the mobile phone and the second electronic device is the router is used. As shown in FIG. 9, an 80 MHz frequency bandwidth (a start frequency is 5170 MHz and a cut-off frequency is 5250 MHz) is used as an example. The router allocates two RUs, namely, an RU1 and an RU3, of a 5 GHz frequency band to the mobile phone. The RU1 and RU2 are both of a 242-tone RU specification, and the RU1 and the RU3 are spaced by an RU2. When a packet needs to be sent, if it is determined, by the mobile phone, that the packet is a packet of a short video service (for example, TikTok) and TikTok is a first service for which a low delay needs to be provided, the mobile phone triggers a multi-RU concurrent sending operation, and sends a same TikTok packet on the RU1 and the RU3 (that is, sends TikTok packets whose Seq=1 and Seq=2 on both the RU1 and the RU3). Using packet transmission in a Wi-Fi aggregation media access control protocol data unit (aggregation media access control protocol data unit, A-MPDU) manner as an example, a packet sent on the RU 1 and the RU 3 and a packet format may be shown in FIG. 11.

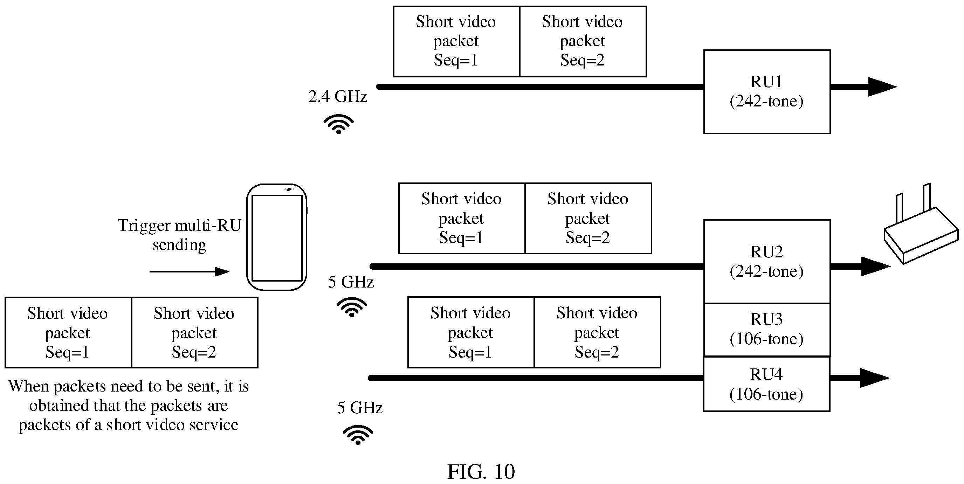

Optionally, the plurality of RUs on which concurrent sending is performed may be a plurality of RUs on a same frequency band or different frequency bands. Alternatively, some RUs of the plurality of RUs belong to a same frequency band, and the other RUs belong to different frequency bands. For example, both the RU 1 and the RU 3 shown in FIG. 9 are RUs of the 5 GHz frequency band. An RU 1 shown in FIG. 10 belongs to a 2.4 GHz frequency band, and both an RU 2 and an RU 4 belong to a 5 GHz frequency band.

Optionally, the plurality of RUs used to concurrently send the first packet may be adjacent or may not be adjacent in a spectrum.

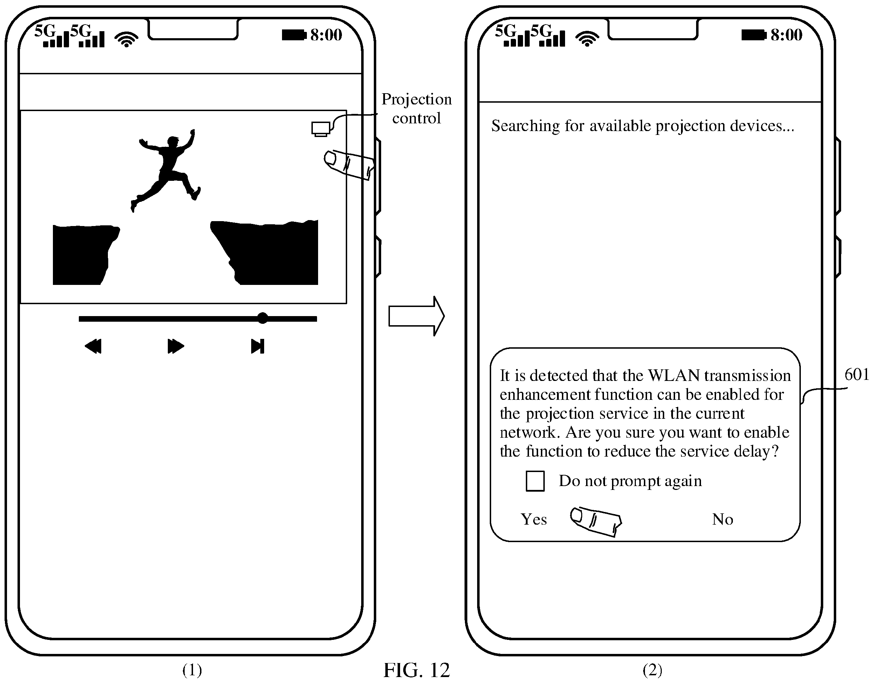

Optionally, the first electronic device may prompt the user to enable the WLAN transmission enhancement function before triggering the multi-RU concurrent sending operation. For example, the first electronic device is the mobile phone. As shown in (1) in FIG. 12, when an operation of the user, for example, tapping a projection control, is detected, the mobile phone displays a prompt box 601 shown in (2) in FIG. 12, to prompt the user to enable the WLAN transmission enhancement function. When an operation that is of the user and that is used to indicate to enable the WLAN transmission enhancement function, for example, tapping an "enable" button shown in (2) in FIG. 12, is detected, the mobile phone triggers the multi-RU concurrent sending operation, and transmits a same packet of a projection service on the plurality of RUs. In a possible design, information such as frequency domain locations, indices, and bandwidths of the plurality of RUs may be allocated by the router. In another possible design, the mobile phone may also select an RU for use. A specific manner of determining the RU is not limited in this embodiment of this application.

A specific prompt manner in which the first electronic device prompts the user to enable the WLAN transmission enhancement function is not limited in this embodiment of this application. For example, the prompt is not limited to a prompt in an interface manner (the prompt may also be a prompt in a voice manner or another manner), and is not limited to a specific presentation manner and a presentation occasion of the interface.

Optionally, the second electronic device may allocate, to the first electronic device, an uplink resource used for uplink transmission. Optionally, the second electronic device allocates, to the first electronic device, the uplink resource, for example, an uplink RU, based on a buffer status report (buffer status report, BSR) mechanism. Specifically, the first electronic device sends a BSR to the second electronic device, to notify the second electronic device of an amount of data that needs to be sent in an uplink buffer (buffer) of the first electronic device, and the second electronic device allocates an RU to the first electronic device based on the notified amount of data. Optionally, the second electronic device may send a trigger frame (trigger frame) to the first electronic device. The trigger frame indicates the RU allocated to the first electronic device. Alternatively, the second electronic device allocates, to the first electronic device in another manner, an RU that may be used for uplink transmission.

A specification of the RU allocated, by the second electronic device, to the first electronic device includes but is not limited to a specification of, for example, a 26-tone RU, a 52-tone RU, a 106-tone RU, a 242-tone RU, a 484-tone RU, and a 996-tone RU.

Optionally, the plurality of RUs allocated, by the second electronic device, to the first electronic device are RUs of a same specification. For example, the plurality of allocated RUs are all RUs with the specification of the 26-tone RU. In this solution, RU scheduling logic of the second electronic device may be simplified.

Alternatively optionally, the plurality of RUs allocated, by the second electronic device, to the first electronic device are RUs of different specifications.

Optionally, to reduce interference, the plurality of RUs allocated, by the second electronic device, to the first electronic device are spaced by a specific frequency domain spacing. In other words, the plurality of RUs are not adjacent in a spectrum.

In some embodiments, the RU used by the first electronic device to transmit the first packet is the RU allocated by the second electronic device. In other words, when the second electronic device allocates a quantity of RUs, the first electronic device transmits the packet of the first service on the quantity of RUs, and packets transmitted on all the RUs are the same.

Alternatively, in some other embodiments, the RU used by the first electronic device to transmit the first service packet is a subset of the RU allocated by the second electronic device. For example, the second electronic device allocates four RUs to the first electronic device, and the first electronic device transmits the packet of the first service on three of the RUs. RUs specifically used by the first electronic device may be determined based on a preset policy. For example, based on a radio frequency capability of the first electronic device, the packet of the first service is preferentially transmitted on an RU in a 5 GHz frequency band range. Alternatively, when it is detected that performance of a current 5 GHz frequency band is poor, the packet of the first service may be transmitted on another supported frequency band, for example, an RU in a 2.4 GHz frequency band range. For another example, to reduce interference between adjacent frequencies, several RUs with a large frequency difference may be selected for transmission, or a plurality of RUs that are non-adjacent in a spectrum may be selected for transmission.

It should be noted that the manner in which the first electronic device determines the RU used to transmit the packet of first service is not limited to the foregoing enumerated manner, and may be another manner.

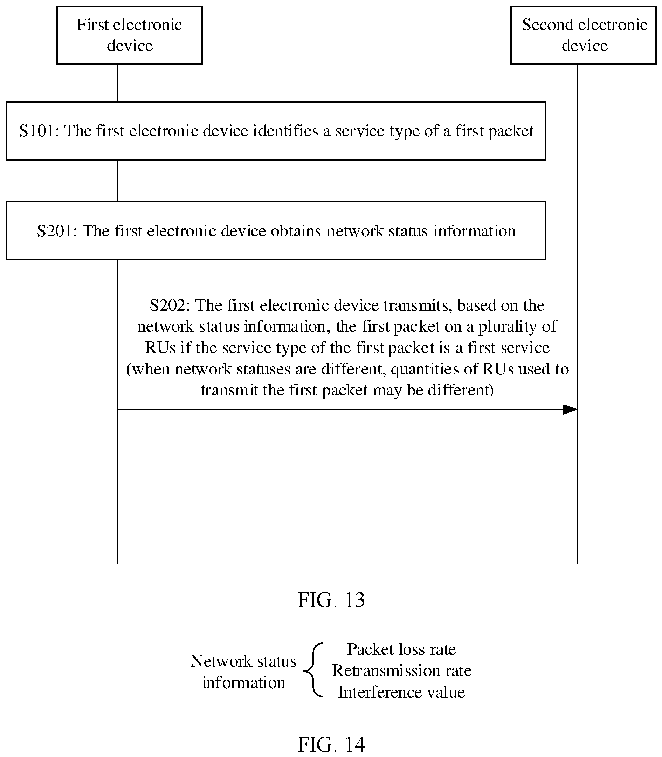

An embodiment of this application further provides a data transmission method in a WLAN. In addition to determining a service type of a packet, a multi-RU sending procedure of a first electronic device may be triggered based on network status information. Refer to FIG. 13. The method may include steps S101, S201, and S202. For specific implementation of S101, refer to the foregoing embodiment.

S201: A first electronic device obtains network status information.

The network status information includes one or more pieces of information shown in FIG. 14: a packet loss rate, an interference value, and a retransmission rate.

Optionally, a Wi-Fi module (for example, a Wi-Fi chip) in the first electronic device collects statistics on the network status information. A processor may obtain the network status information from the Wi-Fi module.

Optionally, the Wi-Fi module may periodically collect statistics on the network status information. A statistical period can be set flexibly. Alternatively, the Wi-Fi module may collect statistics on the network status information based on event triggering. This is not limited in this embodiment of this application.

S202: The first electronic device transmits, based on the network status information, a first packet on a plurality of RUs if a service type of the first packet is a first service.

Optionally, the processor may receive a service type identification result and the network status information of the first packet from the Wi-Fi module. After learning that the first packet is a packet of the first service and learning of a current network status, the processor may trigger and control transmission of the first packet on a corresponding quantity of RUs.

In this embodiment of this application, when it is determined by the first electronic device based on the network status information that the network status is different, a quantity of RUs used by the first electronic device to transmit the first packet may be different. Optionally, in a scenario in which the network status information indicates a poor network status, for example, a high packet loss rate, a packet may be transmitted on more RUs of a plurality of RUs allocated by a second electronic device. In this way, a plurality of packets may be sent concurrently, to improve packet redundancy, so that packet transmission reliability can be improved. In a scenario in which a network status is good, a packet may be transmitted on fewer RUs of the plurality of allocated RUs, so that remaining RUs of the plurality of allocated RUs are reserved for another packet or service for use. In other words, a resource used for packet transmission can be dynamically adjusted based on an actual status of a network in which the first electronic device is located, so that resource utilization can be improved.

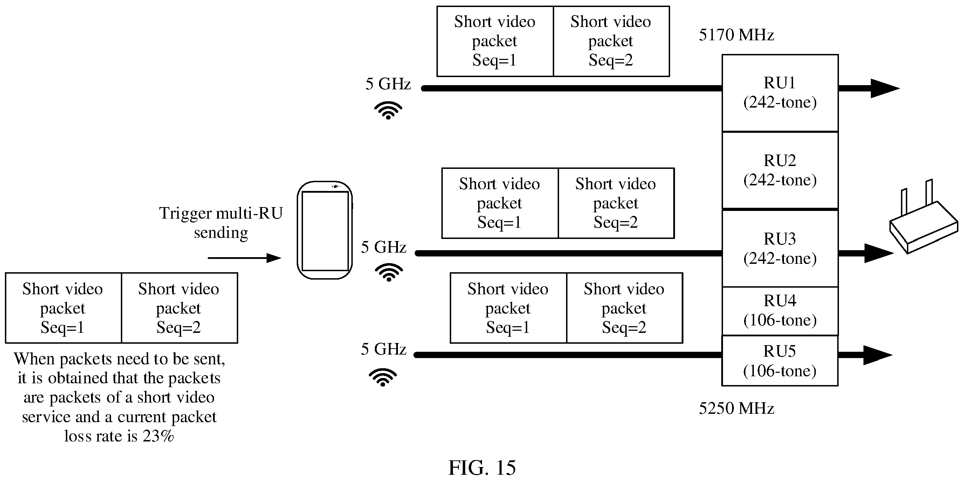

It should be noted that at least two RUs used by the first electronic device for packet transmission may be RUs on a same frequency band, or may be RUs on different frequency bands, or some RUs may belong to a same frequency band, and the other RUs belong to different frequency bands. For example, as shown in FIG. 15, all RUs used by a mobile phone to transmit a short video packet are RUs of a 5 GHz frequency band.

The following describes in detail a relationship between the network status information and the quantity of RUs used to transmit a to-be-sent packet in different cases.

Case 1: The network status information is an interference value. The interference value may be used to measure impact of a Wi-Fi device (for example, a router or mobile phone device working in an adjacent frequency) or a non-Wi-Fi device (for example, interference of a 5G network in 3GPP) on a channel. A high interference value indicates strong interference from the Wi-Fi device or the non-Wi-Fi device. On the contrary, a low interference value indicates weak interference from the Wi-Fi device or the non-Wi-Fi device.

Optionally, a radio status may be obtained by using a clear channel assessment (clear channel assessment, CCA) function. In a possible implementation, by using the CCA function, a signal strength of a channel is detected and an idle rate of the channel is obtained. A busy degree of the channel is calculated by using the idle rate of the channel. The busy degree of the channel may represent the interference value. Generally, a higher busy degree of the channel indicates severer interference to the channel. On the contrary, a high idle rate of the channel indicates low interference to the channel. For example, if a currently detected signal in the channel is a Wi-Fi signal, when a signal strength of the signal is higher than a threshold (for example, -82 dBm), the channel is considered to be busy (busy). If the currently detected signal in the channel is a non-Wi-Fi signal, when a signal strength of the signal is higher than a threshold (for example, -62 dBm), the channel is considered to be busy. If duration in which the channel is in a busy state within a period of time accounts for 30% of the period of time, the busy degree of the channel is 30%. For example, the period of time is 1s (that is, 1000 ms), and the duration in which the channel is in the busy state within 1s is 300 ms. In this case, within 1s, the busy degree of the channel is 300 ms/1000 ms=30%, and 30% may represent the interference value. Herein, detecting the interference value of the channel refers to detecting an interference value within an operating bandwidth of a terminal, instead of detecting an interference value of an entire system bandwidth. For example, a resource granularity is an RU. The terminal may detect interference values generated when a plurality of RUs allocated by the router are interfered by the Wi-Fi device or the non-Wi-Fi device. For example, the resource granularity is a frequency band. The terminal may detect an interference value generated when an operating frequency band (for example, 20 MHz) is interfered by the Wi-Fi device or the non-Wi-Fi device.

In case 1, different interference value thresholds may be set, and an RU configuration used for packet transmission is determined based on a range of interference values within an operating bandwidth.

For example, the RU configuration is a quantity of RUs. A quantity of RUs used for packet transmission may be determined based on a relationship between a current interference value within an operating bandwidth and each interference threshold. For example, as shown in Table 1, when the interference value within the operating bandwidth is greater than or equal to 30% and less than 50%, concurrent sending are performed on two RUs. In other words, a same packet of the first service is transmitted on two RUs of the plurality of RUs allocated by the second electronic device. When the interference value within the operating bandwidth is greater than or equal to 50% and less than 60%, concurrent sending are performed on three RUs. In other words, a same packet of the first service is transmitted on three RUs of the plurality RUs allocated by the second electronic device. When the interference value of the operating bandwidth is greater than 60%, concurrent sending are performed on four RUs for an identified packet of the first service.

**Table 1 Relationship between an interference value of a channel and a quantity of concurrent RUs**

| Interference threshold range | Quantity of concurrent RUs |
|---|---|
| [30%, 50) | 2 |
| [50%, 60%) | 3 |
| Greater than 60% | 4 |

Case 2: The network status information is a packet loss rate. Different packet loss rate thresholds may be set, and an RU configuration used for packet transmission is determined based on a packet loss rate range of the first electronic device.

For example, the RU configuration is a quantity of RUs. As shown in Table 2, when it is determined, by the first electronic device, that a current packet loss rate of a Wi-Fi air interface is greater than 10% and less than or equal to 20%, the first electronic device performs two-RU concurrent sending for an identified packet of the first service. When the packet loss rate of the Wi-Fi air interface is greater than 20% and less than or equal to 25%, the first electronic device performs three-RU concurrent sending for the identified packet of the first service. When the packet loss rate of the Wi-Fi air interface is greater than 25%, the first electronic device performs four-RU concurrent sending for the identified packet of the first service.

**Table 2 Relationship between a packet loss rate of a Wi-Fi air interface and a quantity of concurrent RUs**

| Packet loss rate threshold | Quantity of concurrent RUs |
|---|---|
| (10%, 20%] | 2 |
| (20%, 25%] | 3 |
| Greater than 25% | 4 |

Case 3: The network status information is a retransmission rate. Different retransmission rate thresholds may be set, and an RU configuration used for packet transmission is determined based on a retransmission rate range of the first electronic device.

For example, the RU configuration is a quantity of RUs. As shown in Table 3, when it is determined, by the first electronic device, that a current packet retransmission rate of a Wi-Fi air interface is greater than 10% and less than or equal to 20%, the first electronic device performs two-RU concurrent sending for an identified packet of the first service. When the packet retransmission rate of the Wi-Fi air interface is greater than 20% and less than or equal to 30%, the first electronic device performs three-RU concurrent sending for the identified packet of the first service. When the packet retransmission rate of the Wi-Fi air interface is greater than 30%, the first electronic device performs four-RU concurrent sending for the identified packet of the first service.

**Table 3 Relationship between a packet loss rate of a Wi-Fi air interface and a quantity of concurrent RUs**

| Retransmission rate | Quantity of concurrent RUs |
|---|---|
| (10%, 20%] | 2 |
| (20%, 30%] | 3 |
| Greater than 30% | 4 |

It should be noted that the threshold, the quantity of concurrent RUs, and the association relationship in Table 1 to Table 3 are merely examples. This embodiment of this application is not limited to the threshold shown in the table, and is not limited to the association relationship shown in the table.

It can be learned that the first electronic device may obtain one or more pieces of information such as the packet loss rate, the retransmission rate, and the interference value, and transmit the to-be-sent packet on a corresponding quantity of RUs of the plurality of allocated RUs based on the obtained information and the service type of the to-be-sent packet.

For example, refer to FIG. 15. When a packet arrives in a buffer of the mobile phone, the mobile phone determines that the packet is a packet of a short video service (for example, TikTok), and obtains that the packet loss rate of the Wi-Fi air interface is 23%. In this case, the mobile phone triggers, by querying Table 2, transmission of TikTok packets whose Seq is 1 and whose Seq is 2 by using three RUs in a same frequency band of 5 GHz.

For another example, if the first electronic device obtains that a current packet loss rate is 23% and a current retransmission rate is 25%, according to Table 2 and Table 3, for an identified to-be-sent TikTok packet, a same TikTok packet is transmitted on three RUs. In other words, the TikTok packet is divided into three parts and sent, and each part occupies a part of a frequency domain resource in one RU.

In some other embodiments, the network status information in step S201 may be alternatively replaced with other information. Correspondingly, corresponding information in step S202 may also be replaced. For example, in some scenarios, the network status information in step S201 is replaced with power (or power consumption) information of the first electronic device; and correspondingly, step S202 is replaced with the following: The first electronic device transmits, based on the power (or power consumption) information, a first packet on a plurality of RUs if a service type of the first packet is a first service.

In some other embodiments, a frequency domain resource corresponding to an RU is not only used to transmit the packet of the first service, but also used to transmit a packet of another service (for example, a second service). To be specific, active/standby sending may be implemented in a plurality of RUs. Using the embodiment corresponding to FIG. 7 as an example, the method in the embodiment corresponding to FIG. 7 may further include:
S103: The first electronic device identifies service types of a plurality of second packets.

For the method for identifying the service type of the packet by the first electronic device, refer to step S101. Details are not described herein again.

S104: The first electronic device transmits the plurality of second packets on the plurality of RUs if the service types of the plurality of second packets are non-first services.

Second packets transmitted on different RUs of the plurality of RUs are different. In addition, the first electronic device allocates the plurality of second packets to different RUs for transmission. Alternatively, the plurality of second packets are transmitted, in an aggregated manner, on the plurality of RUs.

In a possible implementation, for the second packet of the non-first service, the first electronic device implements transmission, in the aggregated manner, on the plurality of RUs. The second packet of the non-first service includes a packet of the second service.

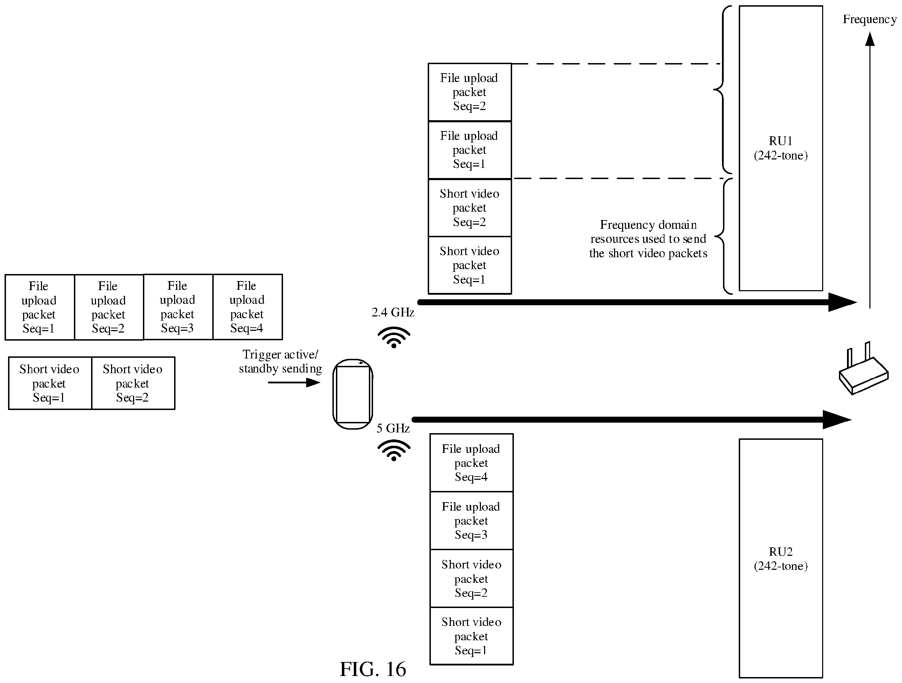

In this embodiment of this application, in addition to frequency domain resources used to transmit the packets of the first service, if there are remaining frequency domain resources in the plurality of RUs allocated by the second electronic device, the remaining frequency domain resources may be used to transmit packets of another service, for example, transmit a plurality of packets of the second service. The plurality of packets of the second service are allocated to different RUs for transmission. For example, as shown in FIG. 16, the router allocates two RUs, an RU 1 and an RU 2, to the mobile phone for uplink transmission. In one or more OFDMA scheduling periods, for a short video packet that requires a low delay, a same short video packet is sent on the RU 1 and the RU 2. In addition to frequency domain resources that can be used to send the short video packet, there are remaining frequency domain resources in the RU1 and the RU2, and some resources of the remaining frequency domain resources may be used to send file upload packets. The some resources of the remaining frequency domain resources may be used to send file upload packets that do not have a strict delay requirement or have a large traffic volume. File upload packets sent on the remaining frequency domain resources of the RU1 are file upload packets whose Seq is 1 and whose Seq is 2. File upload packets sent on the remaining frequency domain resources of the RU2 are file upload packets whose Seq is 3 and whose Seq is 4. File upload packets sent on the remaining frequency domain resources of the RU1 and RU2 are different.

Optionally, the plurality of second packets may not arrive in the buffer at the same time. For example, as shown in FIG. 16, four file upload packets whose sequence numbers are respectively 1 to 4 arrive in the buffer of the mobile phone in sequence. Two packets whose sequence numbers are 1 and 2 are sent on the RU 1, and two packets whose sequence numbers are 3 and 4 are sent on the RU 2.

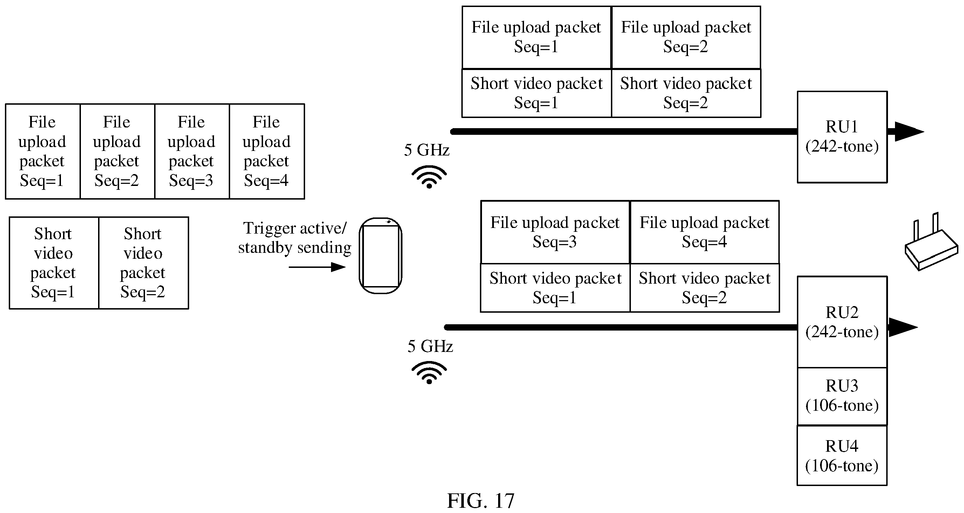

Optionally, the plurality of RUs used for packet transmission may be RUs on a same frequency band or RUs on different frequency bands, or some RUs of the plurality of RUs belong to a same frequency band, and the other RUs belong to different frequency bands. For example, the RU 1 and the RU 2 shown in FIG. 16 belong to different frequency bands. For another example, an RU 1 and an RU 2 shown in FIG. 17 belong to a same frequency band.

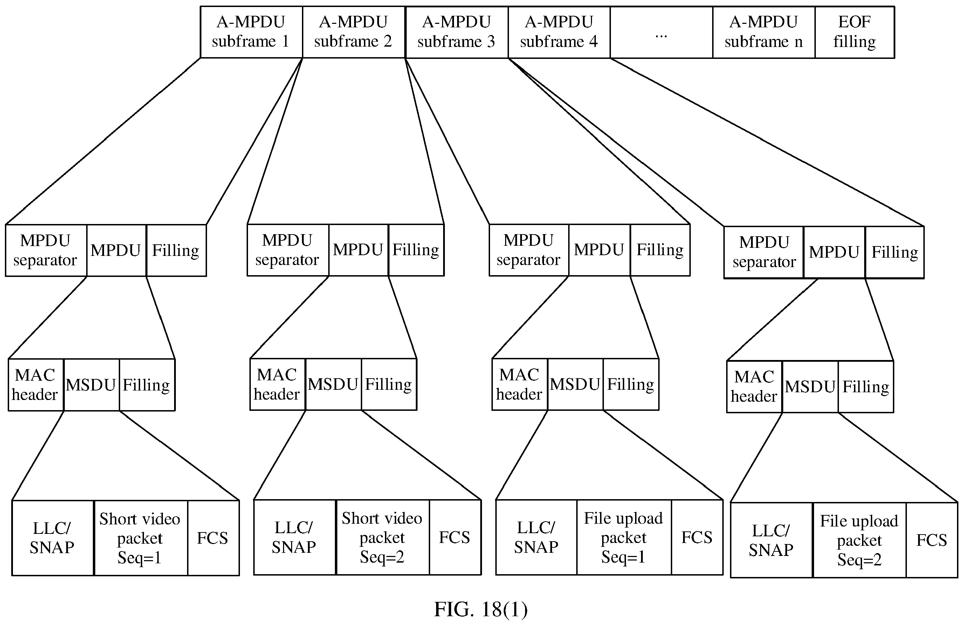

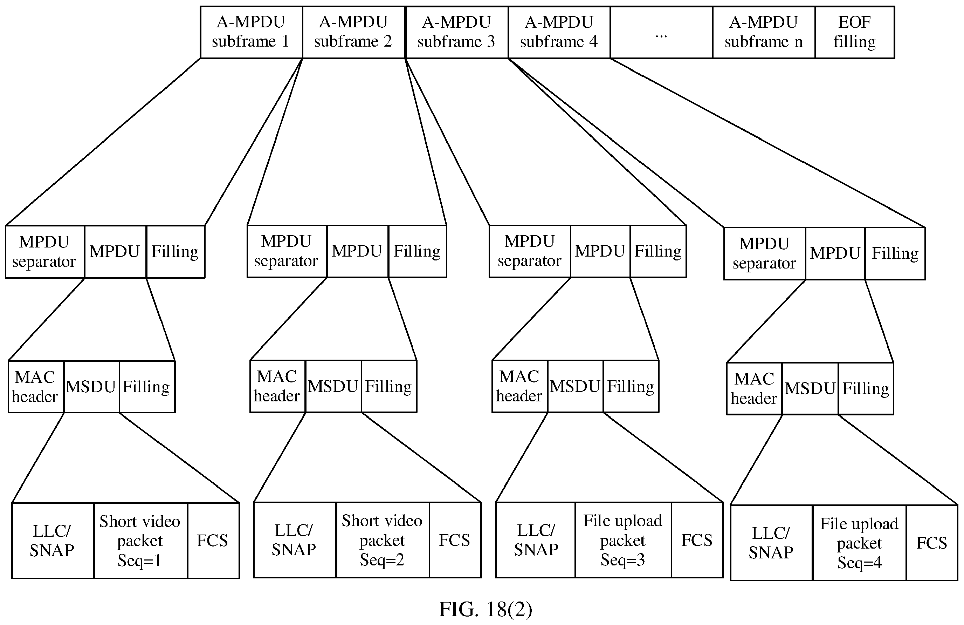

FIG. 18(1) and FIG. 18(2) show an example of a format of the packet transmitted on the RU 1 and the RU 2 shown in FIG. 16 or FIG. 17. FIG. 18(1) shows the packet transmitted on the RU 1, and FIG. 18(2) shows the packet transmitted on the RU 2.

It should be noted that the packet format may be another packet format. A specific format of the packet is not limited in this embodiment of this application.

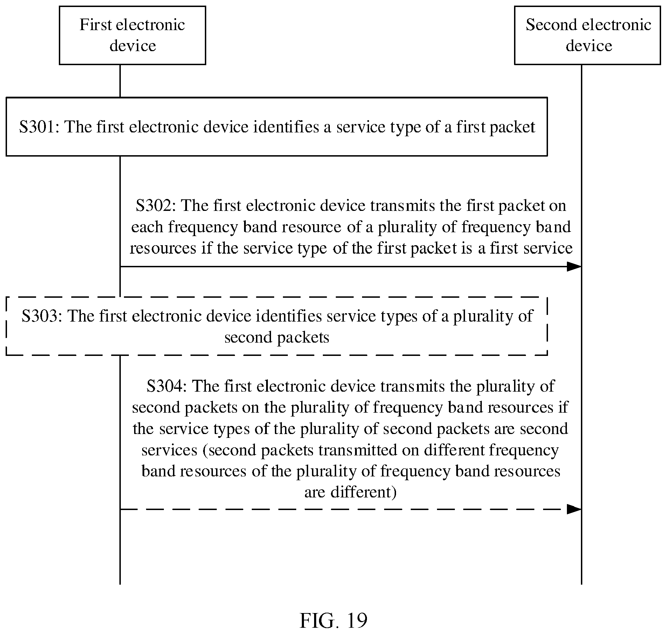

An embodiment of this application further provides a method for packet transmission in a WLAN. In the method, active/standby sending may be implemented on a plurality of frequency bands based on a frequency band as a resource granularity. Refer to FIG. 19. The method includes the following steps.

S301: A first electronic device identifies a service type of a first packet.

S302: The first electronic device transmits the first packet on each frequency band resource of a plurality of frequency band resources if the service type of the first packet is a first service.

S303: The first electronic device identifies service types of a plurality of second packets.

S304: The first electronic device transmits the plurality of second packets on the plurality of frequency band resources if the service type of the second packet is a second service. Second packets transmitted on different frequency band resources of the plurality of frequency band resources are different.

Steps S303 and S304 are optional.

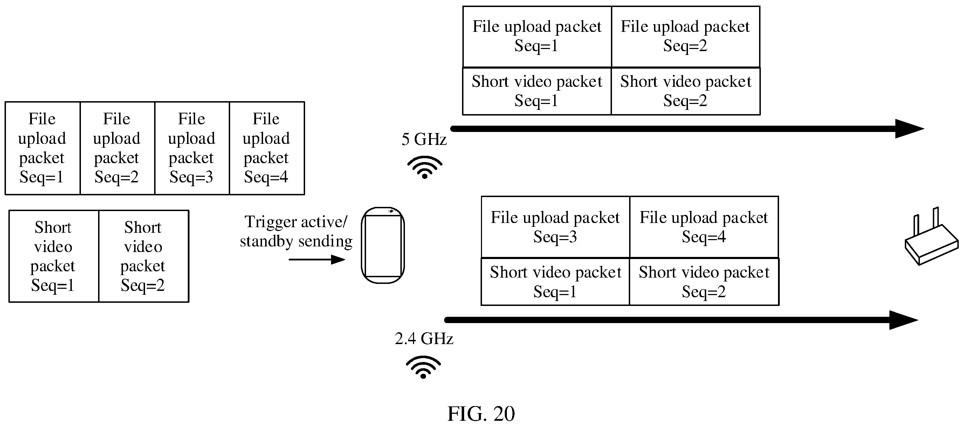

For example, multi-frequency active/standby sending is performed on a frequency band of 2.4 GHz and a frequency band of 5 GHz perform. As shown in FIG. 20, a router and a mobile phone are connected by using two frequency bands of 2.4 GHz and 5 GHz. For low-delay services such as TikTok, a same packet is sent on the 2.4 GHz and 5 GHz frequency bands. For high-bandwidth services such as file upload, different packets are sent on the 2.4 GHz and 5 GHz frequency bands.

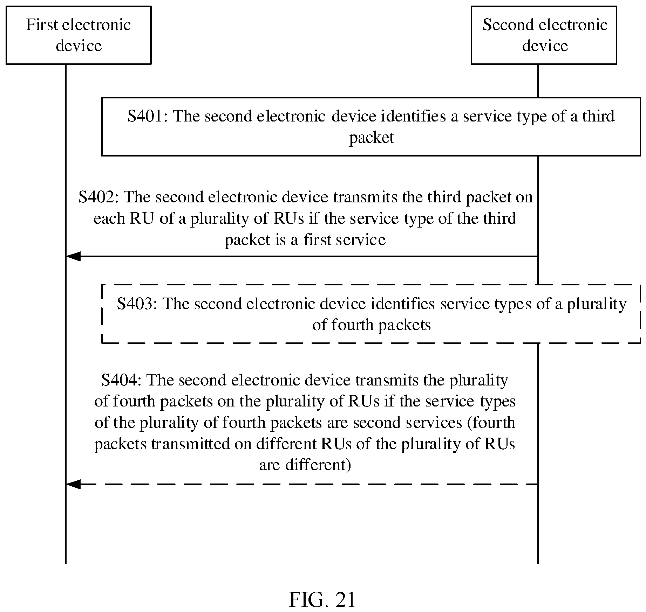

The foregoing mainly describes the data transmission method in this embodiment of this application by using an example in which the first electronic device transmits the packet to the second electronic device (that is, uplink transmission). In some other embodiments, the second electronic device may also transmit data to the first electronic device (that is, perform downlink transmission). Refer to FIG. 21. In downlink transmission, the method includes the following steps.

S401: A second electronic device identifies a service type of a third packet.

The third packet is a downlink packet, that is, a packet sent by a network side to the second electronic device.

In a possible implementation, after identifying packet features of different services, the first electronic device may send feature information to the second electronic device. Subsequently, when the network side sends the third packet, the second electronic device may identify the service type of the third packet based on the feature information obtained from the first electronic device.

In another possible implementation, the second electronic device determines the service type of the third packet based on a port number.

In another possible implementation, the second electronic device may determine the service type of the third packet based on traffic.

In another possible implementation, the second electronic device may determine the service type of the third packet by using a DPI technology.

In another possible implementation, the second electronic device may determine the service type of the third packet based on layer 2/layer 3/layer 4 information of the packet by using ACL rule matching.

In another possible implementation, the second electronic device may determine the type of the third packet based on a plurality of manners in the foregoing manners. A specific manner of identifying the service type by the second electronic device is not limited in this embodiment of this application.

S402: The second electronic device transmits the third packet on each RU of a plurality of RUs if the service type of the third packet is the first service.

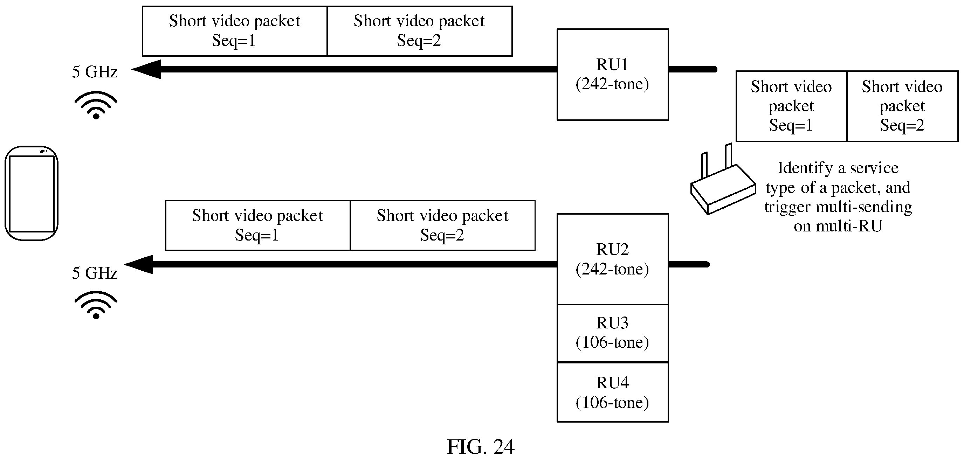

For example, as shown in FIG. 24, the router identifies that the service type of the downlink packet is a short video packet, and triggers multi-RU multi-sending. Specifically, the router sends a same short video packet to the mobile phone by using the RU1 and the RU2.

(Optional) S403: The second electronic device identifies service types of a plurality of fourth packets.

Optionally, the fourth packet is the downlink packet.

(Optional) S404: The second electronic device transmits the plurality of fourth packets on the plurality of RUs if the service types of the plurality of fourth packets are second services.

Fourth packets transmitted on different RUs of the plurality of RUs are different.

Steps S403 and S404 are optional. In other words, the second electronic device may perform concurrent transmission on the plurality of RUs, or may perform active/standby transmission on the plurality of RUs.

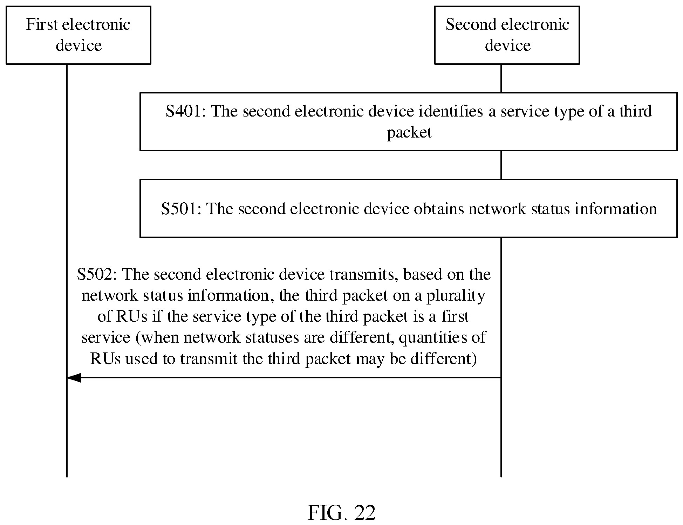

In some other embodiments, the second electronic device may further perform multi-RU concurrent sending based on a network status. Refer to FIG. 22. The method includes the following steps.

S401: A second electronic device identifies a service type of a third packet.

S501: The second electronic device obtains network status information.

For a manner in which the second electronic device obtains the network status information, refer to the manner in which the first electronic device acquires the network status information. Details are not described herein again.

S502: The second electronic device transmits, based on the network status information, the third packet on a plurality of RUs if the service type of the third packet is a first service.

When network statuses are different, quantities of RUs used to transmit the third packet may be different.

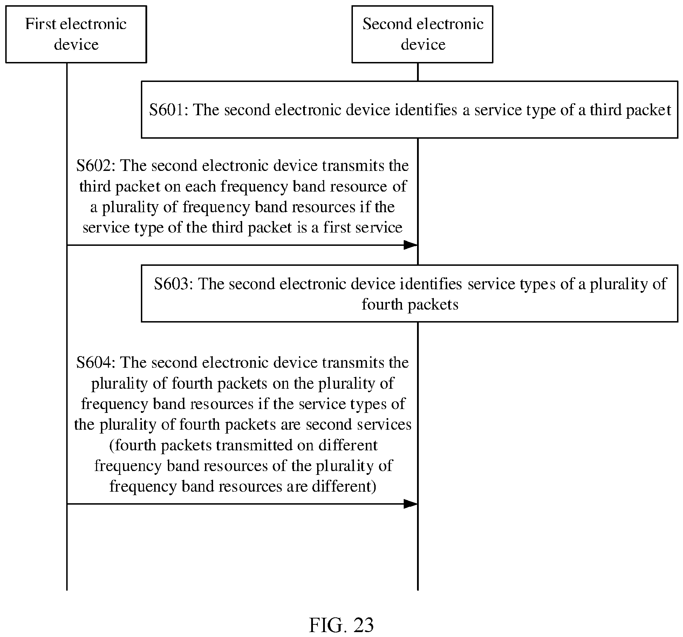

In some other embodiments, a frequency domain resource granularity used when the second electronic device performs active/standby transmission may alternatively be a frequency band granularity. Refer to FIG. 23. The method includes the following steps.

S601: A second electronic device identifies a service type of a third packet.

In this embodiment of this application, the second electronic device may operate on one or more frequency bands of 2.4 GHz, 5 GHz, and 6 GHz, or may operate on another frequency band. Similarly, the second electronic device may operate on one or more frequency bands of 2.4 GHz, 5 GHz, and 6 GHz, or may operate on another frequency band.

S602: The second electronic device transmits the third packet on each frequency band resource of a plurality of frequency band resources if the service type of the third packet is a first service.

In other words, a plurality of third packets may be sent on a plurality of frequency bands, and the third packets sent on each frequency band are the same.

S603: The second electronic device identifies service types of a plurality of fourth packets.

S604: The second electronic device transmits the plurality of fourth packets on the plurality of frequency band resources if the service types of the fourth packets are second services.

Fourth packets transmitted on different frequency band resources of the plurality of frequency band resources are different.

For specific implementation of downlink transmission, refer to the specific implementation of uplink transmission. Details are not described herein again.

An execution sequence of the steps in this embodiment of this application is merely an example, and there may be another execution sequence. This is not limited in this embodiment of this application.

The technical solutions in embodiments of this application may be applied to a scenario in which a packet is transmitted between a first electronic device and a second electronic device, for example, a scenario in which a packet is transmitted between a mobile phone and a router. The method may also be applied to a scenario in which a packet is transmitted between mobile phones, for example, a scenario in which a packet is transmitted between the mobile phones by using a P2P connection like a WLAN direct connection. In addition, this embodiment of this application is not limited thereto.

Some other embodiments of this application provide an apparatus. The apparatus may be the foregoing electronic device (the first electronic device or the second electronic device). The apparatus includes a memory and one or more processors. The memory is coupled to the processor. The memory is configured to store computer program code. The computer program code includes computer instructions. When the processor executes the computer instructions, the electronic device may perform the functions or the steps performed by the mobile phone in the foregoing method embodiments. For a structure of the electronic device, refer to the electronic device shown in FIG. 2 or FIG. 3.

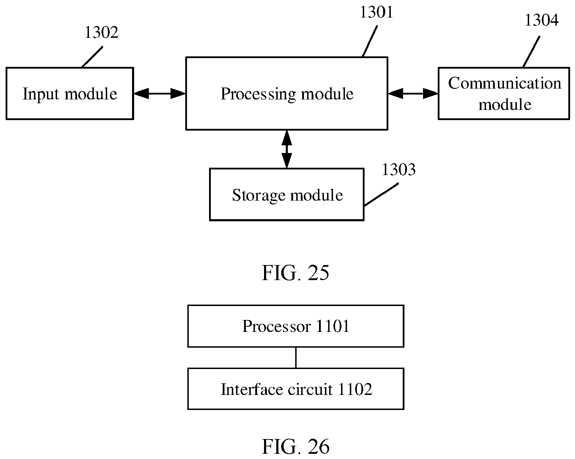

A core structure of the electronic device may be represented as a structure shown in FIG. 25. The core structure includes a processing module 1301, an input module 1302, a storage module 1303, and a communication module 1304.

The processing module 1301 may include at least one of a central processing unit (CPU), an application processor (Application Processor, AP), or a communication processor (Communication Processor, CP). The processing module 1301 may perform an operation or data processing related to control and/or communication of at least one of other elements of the user electronic device.

The input module 1302 is configured to obtain an instruction or data entered by a user, and transmit the obtained instructions or data to another module of the electronic device. For example, the input module may obtain an input operation of the user, generate an input signal based on the obtained input operation, and transmit the input signal to the processing module 1301. If the electronic device is a mobile phone, in this embodiment of this application, the input module may be configured to receive a setting instruction entered by the user, and/or perform another step.

The storage module 1303 may include a volatile memory and/or a non-volatile memory. The storage module is configured to store instructions or data related to at least one of other modules of a user terminal device.

The communication module 1304 is configured to support the electronic device to communicate with another electronic device. For example, the communication module may be connected to a network through wireless communication or wired communication, to communicate with another personal terminal or a network server. The wireless communication may use at least one of cellular communication protocols, such as long term evolution (LTE), long term evolution advanced (LTE-A), code division multiple access (CDMA), wideband code division multiple access (WCDMA), universal mobile telecommunications system (UMTS), wireless broadband (WiBro), or a global system for mobile communications (GSM). The wireless communication may include, for example, short-range communication. The short-range communication may include at least one of wireless fidelity (Wi-Fi), Bluetooth, near field communication (NFC), magnetic stripe transmission (MST), or GNSS.

An embodiment of this application further provides a chip system. The chip system may be applied to the first electronic device or the second electronic device. As shown in FIG. 26, the chip system includes at least one processor 1101 and at least one interface circuit 1102. The processor 1101 and the interface circuit 1102 may be interconnected through a line. For example, the interface circuit 1102 may be configured to receive a signal from another apparatus (for example, a memory of the first electronic device 100). For another example, the interface circuit 1102 may be configured to send a signal to another apparatus (for example, the processor 1101). For example, the interface circuit 1102 may read instructions stored in the memory, and send the instructions to the processor 1101. When the instructions are executed by the processor 1101, the first electronic device is enabled to perform steps performed by the first electronic device 100 (for example, the mobile phone) in the foregoing embodiments. Certainly, the chip system may further include another discrete device. This is not specifically limited in this embodiment of this application.

An embodiment of this application further provides an apparatus. The apparatus is included in a first electronic device or a second electronic device, and the apparatus has a function of implementing behavior of the first electronic device or the second electronic device in any method in the foregoing embodiments. The function may be implemented by hardware, or may be implemented by hardware executing corresponding software. The hardware or the software includes at least one module or unit corresponding to the foregoing function, for example, a detection module or unit and a determining module or unit.

An embodiment of this application further provides a computer-readable storage medium, including computer instructions. When the computer instructions are run on a first electronic device or a second electronic device, the first electronic device or the second electronic device performs any method in the foregoing embodiments.

An embodiment of this application further provides a computer program product. When the computer program product is run on a computer, the computer is enabled to perform any method in the foregoing embodiments.

It can be understood that, to implement the foregoing functions, the electronic device (the first electronic device or the second electronic device) includes corresponding hardware structures and/or software modules for performing the functions. A person skilled in the art should be easily aware that, in combination with the examples described in embodiments disclosed in this specification, units, algorithms, and steps may be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of embodiments of the present invention.

In embodiments of this application, function module division may be performed on the electronic device and the like based on the foregoing method examples. For example, each function module may be obtained through division based on each corresponding function, or two or more functions may be integrated into one processing module. The integrated module may be implemented in a form of hardware, or may be implemented in a form of a software functional module. It should be noted that in embodiments of the present invention, module division is an example, and is merely a logical function division. During actual implementation, another division manner may be used.

The foregoing descriptions about implementations allow a person skilled in the art to clearly understand that, for the purpose of convenient and brief description, division of the foregoing function modules is taken as an example for illustration. In actual application, the foregoing functions can be allocated to different modules and implemented according to a requirement, that is, an inner structure of an apparatus is divided into different function modules to implement all or some of the functions described above. For a detailed working process of the foregoing system, apparatus, and unit, refer to a corresponding process in the foregoing method embodiments. Details are not described herein again.

Functional units in embodiments of this application may be integrated into one processing module, or each of the units may exist alone physically, or two or more units are integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions in embodiments of this application essentially, or the part contributing to conventional technologies, or all or some of the technical solutions may be implemented in a form of a software product. The computer software product is stored in a storage medium, and includes several instructions for instructing a computer device (which may be a personal computer, a server, a network device, or the like) or a processor to perform all or some of the steps of the methods described in embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A data transmission method in a wireless local area network WLAN, applied to an electronic device, wherein the method comprises:
identifying a service type of a first packet; and
transmitting the first packet on each resource unit RU of a plurality of RUs if the service type of the first packet is a first service.

2. The method according to claim 1, wherein the method further comprises: identifying service types of a plurality of second packets; and
transmitting the plurality of second packets on the plurality of RUs if the service types of the plurality of second packets are second services, wherein
second packets transmitted on different RUs of the plurality of RUs are different, and the second service is different from the first service.

3. The method according to claim 1 or 2, wherein the method further comprises:
obtaining network status information; and
the transmitting a same first packet on each RU of a plurality of RUs if the service type of the first packet is a first service comprises: transmitting the first packet on each RU of the plurality of RUs based on the network status information if the service type of the first packet is the first service, wherein
the network status information comprises any one or more pieces of the following information: a packet loss rate, an interference value, and a retransmission rate.

4. The method according to claim 3, wherein the plurality of RUs used to transmit the first packet are different when packet loss rates are in different ranges; and/or the plurality of RUs used to transmit the first packet are different when interference values are in different ranges; and/or the plurality of RUs used to transmit the first packet are different when retransmission rates are in different ranges.

5. The method according to any one of claims 1 to 4, wherein the method further comprises: receiving a setting instruction entered by a user, and the setting instruction is used to set the first service and/or set the second service.

6. The method according to any one of claims 1 to 5, wherein the first service comprises any one or more of the following services: a game, an online course, instant messaging, live streaming, red packet grabbing, projection, an Internet of Things service, and an industrial Internet of Things service.

7. The method according to any one of claims 1 to 6, wherein the second service comprises a file upload service and a file download service.

8. A data transmission method in a wireless local area network WLAN, applied to an electronic device, wherein the method comprises:
identifying a service type of a first packet and identifying service types of a plurality of second packets;
transmitting the first packet on each frequency band of a plurality of frequency bands if the service type of the first packet is a first service; and
transmitting the plurality of second packets on the plurality of frequency bands if the service types of the plurality of second packets are second services, wherein
second packets transmitted on different frequency bands of the plurality of frequency bands are different, and the second service is different from the first service.

9. The method according to claim 8, wherein the method further comprises:
obtaining network status information; and
the transmitting the first packet on each frequency band of a plurality of frequency bands if the service type of the first packet is a first service comprises: transmitting the first packet on each frequency band of the plurality of frequency bands based on the network status information if the service type of the first packet is the first service, wherein
the network status information comprises any one or more pieces of the following information: a packet loss rate, an interference value, and a retransmission rate.

10. The method according to claim 9, wherein the plurality of frequency bands used to transmit the first packet are different when packet loss rates are in different ranges; and/or the plurality of frequency bands used to transmit the first packet are different when interference values are in different ranges; and/or the plurality of frequency bands used to transmit the first packet are different when retransmission rates are in different ranges.

11. The method according to any one of claims 8 to 10, wherein the method further comprises: receiving a setting instruction entered by a user, and the setting instruction is used to set the first service and/or set the second service.

12. The method according to any one of claims 8 to 11, wherein the first service comprises any one or more of the following services: a game, an online course, instant messaging, live streaming, red packet grabbing, projection, an Internet of Things service, and an industrial Internet of Things service.

13. The method according to any one of claims 8 to 12, wherein the second service comprises a file upload service and a file download service.

14. An electronic device, comprising a processor, a memory, a touchscreen, a Wi-Fi module, and a mobile network module, wherein the memory, the touchscreen, the Wi-Fi module, and the mobile network module are coupled to the processor; the memory is configured to store computer program code; the computer program code comprises computer instructions; and when the processor reads the computer instructions from the memory, the electronic device is enabled to perform the method according to any one of claims 1 to 13.

15. A computer-readable storage medium, comprising computer instructions, wherein when the computer instructions are run on an electronic device, the electronic device is enabled to perform the method according to any one of claims 1 to 13.

16. A chip system, comprising one or more processors, wherein when the one or more processors execute instructions, the one or more processors are enabled to perform the method according to any one of claims 1 to 13.
